(19) Europäisches Patentamt
European Patent Office
Office européen des brevets

(11) EP 4 811 872 A1

(12) EUROPEAN PATENT APPLICATION
published in accordance with Art. 153(4) EPC

(43) Date of publication:
**23.09.2026 Bulletin 2026/39**

(21) Application number: **24918886.3**

(22) Date of filing: **18.01.2024**

(51) International Patent Classification (IPC):
***H04W 48/20*** (2009.01) ***H04W 48/10*** (2009.01)
***H04W 48/16*** (2009.01) ***H04W 76/27*** (2018.01)
***H04W 76/28*** (2018.01) ***H04W 74/08*** (2024.01)
***H04W 16/28*** (2009.01) ***H04W 84/06*** (2009.01)

(52) Cooperative Patent Classification (CPC):
**H04W 16/28; H04W 48/10; H04W 48/16; H04W 48/20; H04W 52/02; H04W 72/04; H04W 74/08; H04W 76/27; H04W 76/28; H04W 84/06**

(86) International application number:
**PCT/KR2024/000888**

(87) International publication number:
**WO 2025/154851 (24.07.2025 Gazette 2025/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Samsung Electronics Co., Ltd.**
**Suwon-si, Gyeonggi-do 16677 (KR)**

(72) Inventors:
- **KIM, Sunhyun**
  **Suwon-si, Gyeonggi-do 16677 (KR)**
- **KO, Daeun**
  **Suwon-si, Gyeonggi-do 16677 (KR)**
- **KIM, Dongmyung**
  **Suwon-si, Gyeonggi-do 16677 (KR)**
- **LEE, Sangho**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) METHOD AND DEVICE FOR MANAGING MOBILITY OF RRC IDLE/INACTIVE STATE TERMINAL FOR BEAM SCHEDULING OPERATION IN NON-TERRESTRIAL NETWORK

(57) A method performed by a terminal supporting a non-terrestrial network (NTN), according to one embodiment of the present disclosure, may comprise the steps of: receiving, from a network entity capable of configuring a NTN cell supporting beam scheduling, a system information block (SIB) including time information related to the activation and deactivation of the NTN cell supporting beam scheduling; determining activation and deactivation period information of a first NTN cell on the basis of the time information related to the activation and deactivation of the NTN cell supporting beam scheduling; and performing a radio resource control (RRC) idle state or inactive operation on the basis of the activation and deactivation period information of the first NTN cell.

FIG. 17

START
RECEIVE SYSTEM INFORMATION BLOCK INCLUDING INFORMATION RELATED TO ACTIVATION AND INACTIVATION TIME OF NTN CELL SUPPORTING BEAM SCHEDULING
1710
DETERMINE INFORMATION ON ACTIVATION AND INACTIVATION DUE TO BEAM SCHEDULING CONFIGURATION OF FIRST CELL, ON BASIS OF INFORMATION RELATED TO ACTIVATION AND INACTIVATION TIME OF NTN CELL SUPPORTING BEAM SCHEDULING
1720
PERFORM RRC IDLE/INACTIVE OPERATION OF TERMINAL ON BASIS OF INFORMATION RELATED TO ACTIVATION AND INACTIVATION TIME OF NTN CELL SUPPORTING BEAM SCHEDULING OF FIRST CELL
1730
END

EP 4 811 872 A1

## Description

### [Technical Field]

The present disclosure relates to a method and device of a terminal and a network entity in a non-terrestrial network (NTN). More specifically, the present disclosure relates to a method and device for a terminal and a network entity supporting an NTN to transmit and receive signals according to configuration of spot beam scheduling.

### [Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100μsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collison avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mecahnisms for implementing a hardware-based security environment and safe use of data, and developing technologies for maintaining privacy, attempts to strengthen the connectivity between devices, optimize the network, promote soft-warization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

### [Disclosure of Invention]

**[Technical Problem]**

An object of the present disclosure is to propose a method for acquiring non-terrestrial network (NTN) cell information and a method of operating in a radio resource control (RRC) idle/inactive state of a terminal according to configuration of spot beam scheduling.

The technical problems to be solved by an embodiment of the present disclosure are not limited to the above-mentioned technical problems, and other technical problems, which are not mentioned above, may be clearly understood from the following descriptions by those skilled in the art to which the present disclosure pertains.

**[Solution to Problem]**

According to one embodiment of the present disclosure in order to achieve the aforementioned object, there is provided a method performed by a terminal supporting a non-terrestrial network (NTN), the method comprising: receiving, from a network entity capable of configuring an NTN cell supporting beam scheduling, a system information block (SIB) comprising time information related to activation and inactivation of the NTN cell supporting beam scheduling; determining activation and inactivation period information of a first NTN cell based on the time information related to the activation and inactivation of the NTN cell supporting beam scheduling; and performing a radio resource control (RRC) idle state or inactive operation based on the activation and inactivation period information of the first NTN cell.

According to one embodiment of the present disclosure in order to achieve the aforementioned object, there is provided a method performed by a network entity supporting a non-terrestrial network (NTN), the method comprising: generating a system information block comprising information related to activation and inactivation time of an NTN cell supporting beam scheduling; and transmitting the system information block comprising the information related to activation and inactivation time of the NTN cell supporting beam scheduling, wherein activation and inactivation period information of a first NTN cell is based on the information related to activation and inactivation time of the NTN cell supporting beam scheduling, and a radio resource control (RRC) idle state or inactive operation is based on the activation and inactivation period information of the first NTN cell.

According to one embodiment of the present disclosure in order to achieve the aforementioned object, there is provided a terminal supporting a non-terrestrial network (NTN), the terminal comprising: a transceiver configured to transmit and receive signals; and a controller, wherein the controller: receives, from a network entity capable of configuring an NTN cell supporting beam scheduling, a system information block (SIB) comprising time information related to activation and inactivation of the NTN cell supporting beam scheduling; determines activation and inactivation period information of a first NTN cell based on the time information related to the activation and inactivation of the NTN cell supporting beam scheduling; and performs a radio resource control (RRC) idle state or inactive operation based on the activation and inactivation period information of the first NTN cell.

According to one embodiment of the present disclosure in order to achieve the aforementioned object, there is provided a network entity supporting a non-terrestrial network (NTN), the network entity comprising: a transceiver configured to transmit and receive signals; and a controller, wherein the controller: generates a system information block comprising information related to activation and inactivation time of an NTN cell supporting beam scheduling; and transmits the system information block comprising the information related to activation and inactivation time of the NTN cell supporting beam scheduling, wherein activation and inactivation period information of a first NTN cell is based on the information related to the activation and inactivation time of the NTN cell supporting beam scheduling, and a radio resource control (RRC) idle state or inactive operation is based on the activation and inactivation period information of the first NTN cell.

**[Advantageous Effects of Invention]**

According to various embodiments proposed in the present disclosure, a satellite, a base station, or a terminal supporting a non-terrestrial network (NTN) may perform spot beam scheduling (spot beam hopping).

More specifically, when a spot beam scheduling (spot beam hopping) technology is applied, power consumption may be reduced, and occurrence of a ping-pong effect may be prevented.

An effect obtainable in the present disclosure is not limited to effects mentioned in various embodiments, and other effects not mentioned may be clearly understood, from the description below, by a person having ordinary knowledge in the art to which the present disclosure pertains.

**[Brief Description of Drawings]**

In order to more clearly describe the technical solutions of the embodiments proposed in the present disclosure, the drawings of the embodiments will be briefly introduced. The following drawings only provide reference to the

embodiments of the present disclosure, and do not limit the present disclosure.

FIG. 1 is a diagram illustrating a next-generation mobile communication system to which the present disclosure may be applied.

FIG. 2 is a diagram illustrating a structure of a non-terrestrial network (NTN) to which the present disclosure may be applied.

FIG. 3 is a diagram illustrating an example of a non-terrestrial network (NTN) to which the present disclosure may be applied.

FIG. 4A is a diagram illustrating a classification method according to satellite functions of a non-terrestrial network (NTN) to which the present disclosure may be applied.

FIG. 4B is a diagram illustrating a classification method according to satellite functions of a non-terrestrial network (NTN) to which the present disclosure may be applied.

FIG. 5A is a diagram illustrating an earth fixed cell, a quasi-earth fixed cell, and an earth moving cell of a non-terrestrial network (NTN) to which the present disclosure may be applied.

FIG. 5B is a diagram illustrating an earth fixed cell, a quasi-earth fixed cell, and an earth moving cell of a non-terrestrial network (NTN) to which the present disclosure may be applied.

FIG. 5C is a diagram illustrating an earth fixed cell, a quasi-earth fixed cell, and an earth moving cell of a non-terrestrial network (NTN) to which the present disclosure may be applied.

FIG. 6 is a diagram for explaining spot beam scheduling and a state of a cell according to one embodiment of the present disclosure.

FIG. 7 is a diagram illustrating a procedure in which a terminal acquires information related to spot beam scheduling according to one embodiment of the present disclosure.

FIG. 8A is a diagram illustrating a method in which a terminal calculates an activation and inactivation pattern of a non-terrestrial network (NTN) cell in which beam scheduling is configured, according to one embodiment of the present disclosure.

FIG. 8B is a diagram illustrating a method in which a terminal calculates an activation and inactivation pattern of a non-terrestrial network (NTN) cell in which beam scheduling is configured, according to one embodiment of the present disclosure.

FIG. 9 is a flowchart illustrating a sequence of a method in which a terminal maintains a radio resource control (RRC) idle and inactive state when inactivation occurs due to beam scheduling configuration of a non-terrestrial network (NTN) cell, according to one embodiment of the present disclosure.

FIG. 10A is a diagram illustrating an operation in which a terminal maintains a radio resource control (RRC) idle and inactive state when inactivation occurs due to beam scheduling configuration of a non-terrestrial network (NTN) cell, according to one embodiment of the present disclosure.

FIG. 10B is a diagram illustrating an operation in which a terminal maintains a radio resource control (RRC) idle and inactive state when inactivation occurs due to beam scheduling configuration of a non-terrestrial network (NTN) cell, according to one embodiment of the present disclosure.

FIG. 11 is a flowchart explaining a sequence in which a terminal omits physical downlink control channel (PDCCH) monitoring when inactivation occurs due to beam scheduling configuration of a non-terrestrial network (NTN) cell, according to one embodiment of the present disclosure.

FIG. 12 is a diagram illustrating a method in which a terminal omits physical downlink control channel (PDCCH) monitoring when inactivation occurs due to beam scheduling configuration of a non-terrestrial network (NTN) cell, according to one embodiment of the present disclosure.

FIG. 13 is a flowchart explaining a method in which a terminal delays transmission of uplink traffic when inactivation occurs due to beam scheduling configuration of a non-terrestrial network (NTN) cell, according to one embodiment of the present disclosure.

FIG. 14 is a diagram illustrating an operation in which a terminal delays transmission of uplink traffic when inactivation occurs due to beam scheduling configuration of a non-terrestrial network (NTN) cell, according to one embodiment of the present disclosure.

FIG. 15 is a flowchart explaining a sequence of performing cell reselection when inactivation occurs due to configuration of beam scheduling of a non-terrestrial network (NTN) cell, according to one embodiment of the present disclosure.

FIG. 16A is a diagram illustrating an operation in which a terminal suspends a random access procedure when inactivation occurs due to configuration of beam scheduling of a non-terrestrial network (NTN) cell, according to one embodiment of the present disclosure.

FIG. 16B is a diagram illustrating an operation in which a terminal suspends a random access procedure when inactivation occurs due to configuration of beam scheduling of a non-terrestrial network (NTN) cell, according to one embodiment of the present disclosure.

FIG. 17 is a flowchart illustrating a sequence of a terminal operation according to one embodiment of the present disclosure.

FIG. 18 is a flowchart illustrating a sequence of an operation of a network entity supporting a non-terrestrial network (NTN) according to one embodiment of the present disclosure.

FIG. 19 is a diagram illustrating an internal structure of a terminal according to one embodiment of the present disclosure.

FIG. 20 is a diagram illustrating an internal structure of a network entity supporting an NTN according to one embodiment of the present disclosure.

**[Mode for the Invention]**

Hereinafter, embodiments of the present disclosure will be described in detail with reference to the accompanying drawings.

In describing the embodiments, descriptions of technical contents that are well known in the technical field to which the present disclosure belongs and are not directly related to the present disclosure will be omitted.

This is to more clearly describe the subject matter of the present disclosure without obscuring the subject matter by omitting any unnecessary description.

For the same reason, some components are exaggerated, omitted, or schematically illustrated in the accompanying drawings. In addition, the size of each component does not entirely reflect the actual size. The same or corresponding components are given the same reference numerals in each drawing.

Advantages and features of the present disclosure, and methods for achieving them will become clear with reference to the embodiments described below in detail together with the accompanying drawings.

However, the present disclosure is not limited to the embodiments disclosed below, but may be implemented in various different forms, and only the present embodiments are provided to complete configuration of the present disclosure and to completely inform a person with ordinary skill in the art to which the present disclosure belongs of the scope of the invention, and the present disclosure is defined only by the scope of the claims. Like reference numerals refer to like components throughout the specification.

In this case, it will be understood that each block of the processing flowcharts and combinations of the flowcharts may be performed by computer program instructions. Since these computer program instructions may be implemented on a processor of a general-purpose computer, a special-purpose computer, or other programmable data processing equipment, the instructions performed through the processor of the computer or other programmable data processing equipment create means for performing functions described in the flowchart block(s). Since these computer program instructions may also be stored in a computer-usable or computer-readable memory that may orient a computer or other programmable data processing equipment to implement in a specific manner, the instructions stored in the computer-usable or computer-readable memory may also produce an article of manufacture including instruction means for performing the function described in the flowchart block(s). Since the computer program instructions may also be mounted on a computer or other programmable data processing equipment, a series of operational steps are performed on the computer or other programmable data processing equipment to generate a computer-executed process, and the instructions executing the computer or other programmable data processing equipment may also provide steps for executing functions described in the flowchart block(s).

In addition, each block may represent a part of a module, a segment, or a code including one or more executable instructions for executing specified logical function(s). Also, it should be noted that in some alternative execution examples, functions mentioned in the blocks may occur out of order. For example, two blocks illustrated in succession may actually be performed substantially simultaneously, or the blocks may sometimes be performed in reverse order according to a corresponding function.

In this case, the term '~ unit' used in the present embodiment means software or a hardware component such as FPGA or ASIC, and the '~ unit' performs certain roles. However, the '~ unit' is not meant to be limited to software or hardware. The '~ unit' may be configured to be in an addressable storage medium, and may be configured to regenerate one or more processors. Therefore, as an example, the '~ unit' includes components such as software components, object-oriented software components, class components, and task components, processes, functions, attributes, procedures, subroutines, segments of program code, drivers, firmware, microcode, circuitry, data, databases, data structures, tables, arrays, and variables. Functions provided within components and '~ units' may be combined into a smaller number of components and '~ units' or may be further separated into additional components and '~ units'. In addition, components and '~ units' may be implemented to regenerate one or more CPUs within a device or a secure multimedia card.

For convenience of description below, some terms and names defined in the 3rd generation partnership project (3GPP) standard (standards of 5G, NR, LTE, or standard of a system similar thereto) may be used. In addition, terms and names that are newly defined in a next-generation communication system (for example, 6G, Beyond 5G system) to which

the present disclosure may be applied, or used in an existing communication system may be used. The use of these terms is not limited by the terms and names of the present disclosure, and may be equally applied to systems complying with other standards, and may be changed into other forms within a scope that does not depart from the technical spirit of the present disclosure. Embodiments of the present disclosure may be easily modified and applied to other communication systems.

In addition, it will be understood that singular expressions such as "a", "an", and "the" that do not clearly indicate other contents in an embodiment of the present disclosure include plural expressions.

In addition, in an embodiment of the present disclosure, terms including ordinal numbers such as first, second, etc. may be used to describe various components, but the components are not limited by the terms. The terms are used only for the purpose of distinguishing one component from another component. For example, a first component may be named a second component without departing from the scope of rights of the present disclosure, and similarly, a second component may also be named a first component.

In addition, in an embodiment of the present disclosure, the term and/or includes a combination of a plurality of related listed items or any item of a plurality of related listed items.

In addition, terms used in an embodiment of the present disclosure are used only to describe specific embodiments, and are not intended to limit the present disclosure. Singular expressions include plural expressions unless the context clearly indicates otherwise. In the present specification, terms such as "comprises," "comprising," "includes," "including," "containing," "has," "having" or other variations thereof are intended to designate that a feature, number, step, operation, component, part, or a combination thereof described in the specification exists, but it should be understood that it does not preclude the possibility of existence or addition of one or more other features, numbers, steps, operations, components, parts, or combinations thereof in advance.

In addition, terms "associated with" and "associated therewith" used in an embodiment of the present disclosure and derivatives thereof may mean to include, be included within, interconnect with, contain, be contained within, connect to or with, couple to or with, be communicated with, cooperate with, interleave, juxtapose, be proximate to, be bound to or with, have, have a property of, and the like.

In addition, in the present disclosure, expressions of more than or less than are used to determine whether a specific condition is satisfied or fulfilled, but this is only a description for expressing an example and does not exclude descriptions of equal to or greater than or equal to or less than. A condition described as 'equal to or greater than' may be replaced with 'more than', a condition described as 'equal to or less than' may be replaced with 'less than', and a condition described as 'equal to or greater than and less than' may be replaced with 'more than and equal to or less than'.

In addition, in the present disclosure, embodiments are described using terms used in some communication standards (e.g., long term evolution (LTE), new radio (NR) defined in the 3rd generation partnership project (3GPP)), but this is only an example for description. Embodiments of the present disclosure may be easily modified and applied to other communication systems.

Prior to a detailed description of the present disclosure, examples of interpretable meanings are presented for several terms used in the present specification. However, it should be noted that it is not limited to the interpretation examples presented below.

In the present disclosure, a terminal (or, a communication terminal) is a subject that communicates with a base station or another terminal, and may be referred to as a node, a user equipment (UE), a next generation UE (NG UE), a mobile station (MS), a device, a terminal, or the like. In addition, the terminal may include at least one of a smartphone, a tablet PC, a mobile phone, a video phone, an e-book reader, a desktop PC, a laptop PC, a netbook computer, a PDA, a portable multimedia player (PMP), an MP3 player, a medical device, a camera, or a wearable device. In addition, the terminal may include at least one of a television, a digital video disk (DVD) player, an audio, a refrigerator, an air conditioner, a vacuum cleaner, an oven, a microwave oven, a washing machine, an air purifier, a set-top box, a home automation control panel, a security control panel, a media box, a game console, an electronic dictionary, an electronic key, a camcorder, or an electronic frame. In addition, the terminal may include at least one of various medical devices (e.g., various portable medical measurement devices (a blood glucose meter, a heart rate meter, a blood pressure meter, or a body temperature meter, etc.), magnetic resonance angiography (MRA), magnetic resonance imaging (MRI), computed tomography (CT), a camera, or an ultrasonic machine, etc.), a navigation device, a global navigation satellite system (GNSS), an event data recorder (EDR), a flight data recorder (FDR), an automotive infotainment device, marine electronic equipment (e.g., a marine navigation device, a gyro compass, etc.), avionics, a security device, a head unit for a vehicle, an industrial or home robot, a drone, an ATM of a financial institution, a point of sales (POS) of a store, or an Internet of Things device (e.g., a light bulb, various sensors, a sprinkler device, a fire alarm, a thermostat, a street light, a toaster, exercise equipment, a hot water tank, a heater, a boiler, etc.). In addition, the terminal may include various types of multimedia systems capable of performing communication functions. Meanwhile, the present disclosure is not limited to the above, and the terminal may also be referred to by terms having the same or similar meaning.

In addition, in the present disclosure, a base station communicates with a terminal and is a subject that performs resource allocation of the terminal, and may have various forms, and may be referred to as a base station (BS), a NodeB

(NB), a next generation radio access network (NG RAN), an access point (AP), a transmission reception point (TRP), a wireless access unit, a base station controller, or a node on a network, etc. Alternatively, it may be referred to as a central unit (CU) or a distributed unit (DU) according to functional separation. Meanwhile, the present disclosure is not limited thereto, and the base station may also be referred to by terms having the same or similar meaning.

In addition, in the present disclosure, a radio resource control (RRC) message may be referred to as higher level information, a higher level message, a higher level signal, higher level signaling, high layer signaling, or higher layer signaling, and the present disclosure is not limited thereto, and it may also be referred to by terms having the same or similar meaning.

In addition, in the present disclosure, data may be referred to as user data, user plane (UP) data, or application data, or may be referred to by terms having the same or similar meaning as a signal transmitted and received through a data radio bearer (DRB).

In addition, in the present disclosure, a direction of data transmitted from a terminal may be referred to as uplink, and a direction of data transmitted to a terminal may be referred to as downlink. Accordingly, in case of uplink transmission, a transmitter may refer to a terminal, and a receiver may refer to a base station or a specific network entity of a communication system. Alternatively, in case of downlink transmission, a transmitter may refer to a base station or a specific network entity of a communication system, and a receiver may refer to a terminal.

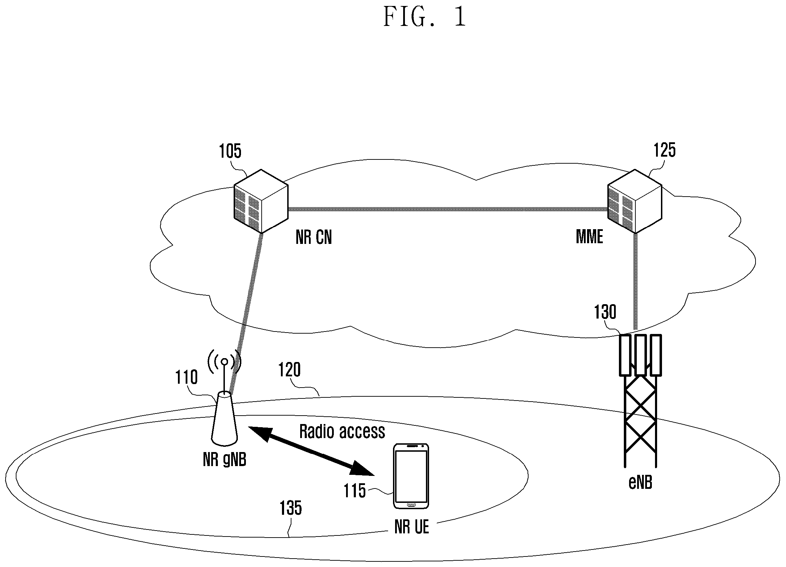

FIG. 1 is a diagram illustrating a next-generation mobile communication system to which the present disclosure may be applied.

With reference to FIG. 1, a radio access network of a next-generation mobile communication system may consist of a next-generation base station (New Radio Node B, hereinafter NR gNB or NR base station) 110 and a next-generation wireless core network (New Radio Core Network, NR CN) 105. A next-generation wireless user terminal (New Radio User Equipment, NR UE or terminal) 115 may access an external network through the NR gNB 110 and the NR CN 105.

In FIG. 1, the NR gNB 110 may correspond to an Evolved Node B (eNB) of an existing LTE system. The gNB is connected with the NR UE 115 via a wireless channel, and may provide a service more superior than an existing Node B. In a next-generation mobile communication system, all user traffic may be serviced through a shared channel. Therefore, a device that collects state information such as buffer states, available transmission power states, and channel states of UEs to perform scheduling is required, and the NR gNB 110 may take charge of this. One NR gNB 110 may control a plurality of cells. In a next-generation mobile communication system, in order to implement ultra-high-speed data transmission compared to current LTE, a bandwidth equal to or greater than a current maximum bandwidth may be applied. In addition, a beamforming technology may be additionally grafted by using Orthogonal Frequency Division Multiplexing (OFDM) as a radio access technology. In addition, an Adaptive Modulation & Coding (hereinafter referred to as AMC) method that determines a modulation scheme and a channel coding rate according to a channel state of a terminal may be applied.

The NR CN 105 may perform functions such as mobility support, bearer configuration, and quality of service (QoS) configuration. The NR CN 105 is a device in charge of various control functions as well as a mobility management function for a terminal, and may be connected to a plurality of base stations. In addition, a next-generation mobile communication system may also interwork with an existing LTE system, and the NR CN 105 may be connected to an MME 125 through a network interface. The MME 125 may be connected to an eNB 130 which is an existing base station. Meanwhile, the next-generation mobile communication system described above only corresponds to an example of a communication system to which the present disclosure may be applied, and the present disclosure is not limited thereto. It is obvious that the present disclosure may also be applied to a communication system having a configuration different from the next-generation mobile communication system described above.

Meanwhile, in mobile communication systems including 3G, long term evolution (LTE), and 5G as described above, connectivity capable of transmitting and receiving voice and data in various devices has been provided. Existing mobile communication systems have provided connectivity not only to portable personal terminals such as mobile phones, smartphones, and personal tablets, but also to light and small sensor terminals and Internet of Things terminals, and devices with high mobility such as connected cars, drones, and Unmanned Aerial Vehicles (UAVs), and the number and range of devices provided with connectivity through mobile communication systems are expected to continuously expand.

In the mobile communication system described above, when providing connectivity to a device, communication was performed through a terrestrial base station installed on the ground using a radio frequency. Terrestrial base stations have advantages of easy installation and management, but there is a physical limitation that an installation location is on the ground. Due to these limitations, it is difficult to provide connectivity to oceans and devices in oceans (for example, ships, or smartphones on ships) where terrestrial base station installation is difficult, or to airspace and devices in airspace at or above a predetermined altitude (for example, airplanes, high-altitude pseudo-satellites (HAPS), or hot air balloons).

In order to overcome physical limitations of existing mobile communication systems and expand a range of providing connectivity globally from the ground, next-generation mobile communication systems such as 5G, Beyond 5G, and 6G are considering a communication system in a form in which a terrestrial network and a satellite network are combined. Existing satellite networks have also provided connectivity through satellites, but existing satellite networks have been operated as a separate independent network from mobile communication systems, and communication with a

satellite network was possible through dedicated terminals and devices. As a result, in order for a user of an existing mobile communication system to use a satellite network, additional procedures such as separate device purchase and satellite network user registration were required. In order to resolve inconveniences when using such a satellite network and provide a user with seamless and smooth connectivity regardless of a user's location, a satellite-integrated terrestrial network technology or a non-terrestrial network (NTN) technology in which a satellite network is combined with a mobile communication system is being discussed. If a satellite-integrated terrestrial network is utilized, connectivity may be provided not only to devices connectable on the existing ground but also to devices in the sea and devices in the airspace, and connectivity may also be provided to devices in rural areas, rugged terrain, and underdeveloped areas where mobile communication infrastructure installation was not easy.

Hereinafter, a technical field of Non-Terrestrial Network (NTN) communication, which enables services to areas where communication services are impossible (for example, at sea, at polar regions, in remote areas, in the air) by using satellites in a mobile communication system, will be described in detail. The mobile communication technology may include not only 5G that adopts NTN as a standard but also 6G which expects commercialization in the 2030s. In addition, mobile communication technologies described in the present disclosure include a mobile communication system for supporting an NTN, a satellite system, and a system in which a mobile communication and a satellite system are combined.

Meanwhile, the communication system described above only describes an example of a communication system to which the present disclosure may be applied, and the present disclosure is not limited thereto. That is, embodiments proposed in the present disclosure may be applied and implemented in various communication systems.

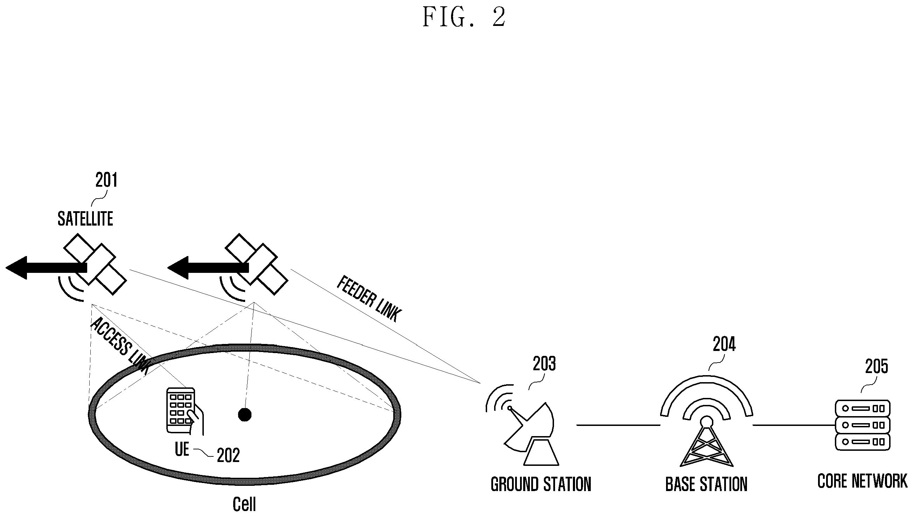

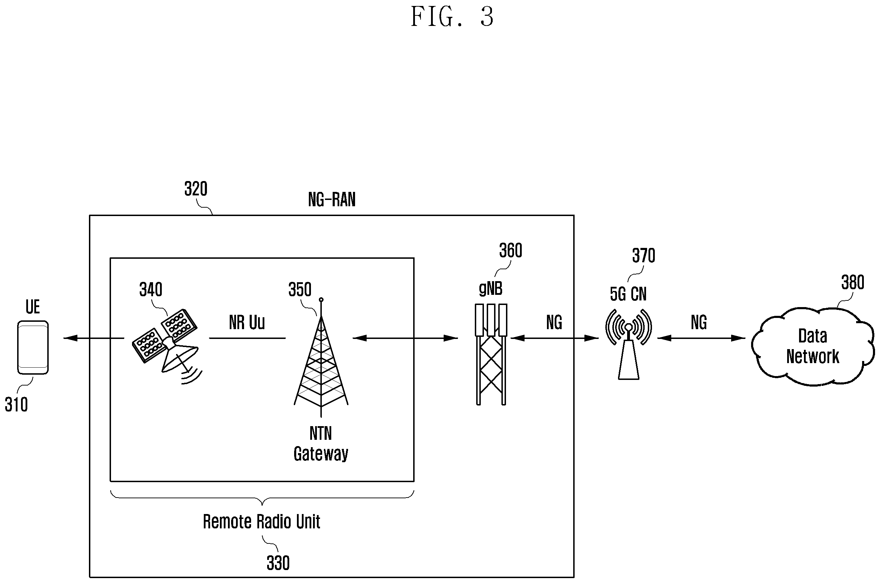

Hereinafter, with reference to FIG. 2 and FIG. 3, an NTN considered in the present disclosure will be described in detail.

FIG. 2 is a diagram illustrating a structure of a non-terrestrial network (NTN) to which the present disclosure may be applied.

A non-terrestrial network (NTN) may include a technology that utilizes a satellite as a repeater to build a communicable area in an area where base station installation for mobile communication is physically and/or economically impossible.

With reference to FIG. 2, an NTN to which the present disclosure may be applied may consist of a satellite 201, a terminal (UE) 202, a ground station 203, a base station 204, or a core network 205. Meanwhile, the NTN considered in the present disclosure is not limited to the configuration illustrated in FIG. 2, and a network entity or a network node may be additionally included.

As illustrated in FIG. 2, a connection between the terminal 202 and the satellite 201 may be referred to as an access link, and a connection between the satellite 201 and the ground station 203 may be referred to as a feeder link. Meanwhile, a feeder link may mean a connection between the satellite 201 and the base station 204, and when the ground station 203 and the base station 204 are merged into one, it may mean a connection between the merged ground station 203 and base station 204 and the satellite 201.

The core network 205 may include a user plane function (UPF) and a network function (NF) of NR or a satellite control server in satellite communication.

An altitude of a satellite that may be used for the satellite described above varies. Satellites that may be used in an NTN may be divided into a geostationary earth orbit (GEO) satellite, a medium earth orbit (MEO) satellite satellite, and a low earth orbit (LEO) satellite according to an altitude of a moving satellite.

A GEO satellite is a satellite flying in a geostationary orbit at an altitude of about 36,000 km, and since it is the same as the rotation period of the earth, when looking at the satellite from the earth's surface, it looks as if it is stationary at a point in the space. When communicating with a geostationary earth orbit satellite due to a high satellite altitude, radio signals are relatively weak compared to a terrestrial network because radio wave arrival signals suffer from path loss, and performance of communication through radio signals is also low. In addition, a round trip time of radio waves between a satellite and devices and terminals on the earth's surface is relatively long (about 500 milliseconds). Since low earth orbit satellites and medium earth orbit satellites exist at lower altitudes compared to geostationary earth orbit satellites, path loss is less and radio signals are relatively strong.

Meanwhile, compared to terrestrial networks, path loss is still large and radio signals are weak. In addition, low earth orbit satellites and medium earth orbit satellites move at a very fast speed (about 7.56 km based on low earth orbit) relative to the earth's surface, unlike geostationary earth orbit satellites.

Meanwhile, an LEO satellite is a satellite existing at an altitude of about 200 km to 2000 km, and exists at a relatively low altitude compared to other satellites (for example, GEO satellites, MEO satellites). Due to a correlation between an altitude of a satellite and a delay time, a relatively low delay time may be guaranteed when using an LEO satellite. That is, in case of an LEO satellite, there is an advantage of a low delay time because a round trip time of radio waves is short. Meanwhile, an LEO satellite still has large path loss and weak radio signals compared to terrestrial networks. In addition, since the speed of an LEO satellite is about 7.56 km/s based on an altitude of 600 km, which is very fast compared to other satellites (GEO satellites, MEO satellites), synchronization of frequency and/or time continuously changes in a terminal or a satellite antenna having no mobility. Therefore, a technology for calculating and correcting a

change in synchronization due to mobility of a satellite becomes a core technology in an NTN.

FIG. 3 is a diagram illustrating an example of a non-terrestrial network (NTN) to which the present disclosure may be applied.

FIG. 3 is a diagram illustrating an example in which an NTN considered in the present disclosure is applied to an NR system.

With reference to FIG. 3, an NTN may consist of an NG-RAN 320, a 5G CN 370, and a data network 380. The NG-RAN 320 may consist of a remote radio unit 330 and a gNB 360, and the remote radio unit 330 may consist of a satellite 340 and an NTN gateway 350. When a terminal (UE) 310 accesses an NTN, the terminal may transmit and receive data with the satellite 340, and the satellite 340 may transmit and receive data with the NTN gateway 350. The NTN gateway 350 may be connected to the gNB 360, and the gNB 360 may be accessed to the data network 380 through the 5G CN 370.

In the same manner as a synchronous communication technology of a terrestrial network that synchronizes between a terminal and a base station and transmits and receives data accordingly, an NTN also synchronizes between a terminal and a satellite and transmits and receives data accordingly. Therefore, accurately synchronizing uplink synchronization and downlink synchronization between a terminal and a satellite may greatly affect performance of communication. According to one embodiment, downlink synchronization is synchronized using a synchronization signal broadcast by a satellite, and uplink synchronization is synchronized using a signal transmitted from a terminal.

According to one embodiment of the present disclosure, a satellite may broadcast a synchronization signal for informing a terminal of synchronization information at a predetermined cycle. In an NTN to which the present disclosure may be applied, a satellite may broadcast a synchronization signal such as a synchronization signal block (SSB) at a predetermined cycle. An SSB may consist of a primary synchronization signal (PSS), a secondary synchronization signal (SSS), and a physical broadcast channel (PBCH), and may include a signal informing synchronization information.

When a terminal initially accesses a cell or handovers from another cell, the terminal may obtain downlink synchronization information through information of a synchronization signal. In addition, a terminal may obtain uplink synchronization information by performing a random access procedure (or, a random access channel (RACH) procedure) for an initially accessed cell or a target cell of handover.

In addition, in 3GPP NTN, standardization has progressed so that a terminal may access when accessing a base station through a satellite after partially self-correcting frequency and time synchronization. In order for a terminal to correct frequency and time synchronization, a location of a terminal, information related to mobility of a terminal, a location of a satellite, and information related to mobility of a satellite are essential.

Accordingly, in the NTN standard, a terminal measures mobility and location information of a terminal utilizing a Global Navigation Satellite System (GNSS), and uses measured result values for frequency and time synchronization correction and terminal mobility management. In addition, a terminal may receive location information or mobility information of a satellite through a broadcasting message transmitted to a base station connected to a satellite. The broadcasting message may include various information related to a satellite and a satellite cell formed by a satellite, including location, speed, and orbit information of a satellite.

In 3GPP NR NTN, System Information Block 19 (SIB19) was defined as a broadcasting message including the above-identified information. The corresponding message may include an Information Element (IE) including orbit information, location information, and speed information of a satellite connected to a base station transmitting the broadcasting message, and besides this, it may also include information related to satellite cell operation (e.g., satellite cell center location and diameter, neighboring satellite cell information).

Hereinafter, a non-terrestrial network (NTN) satellite, an NTN cell, a spot beam capable of configuring an NTN cell, and a spot beam scheduling technique according to one embodiment of the present disclosure will be described.

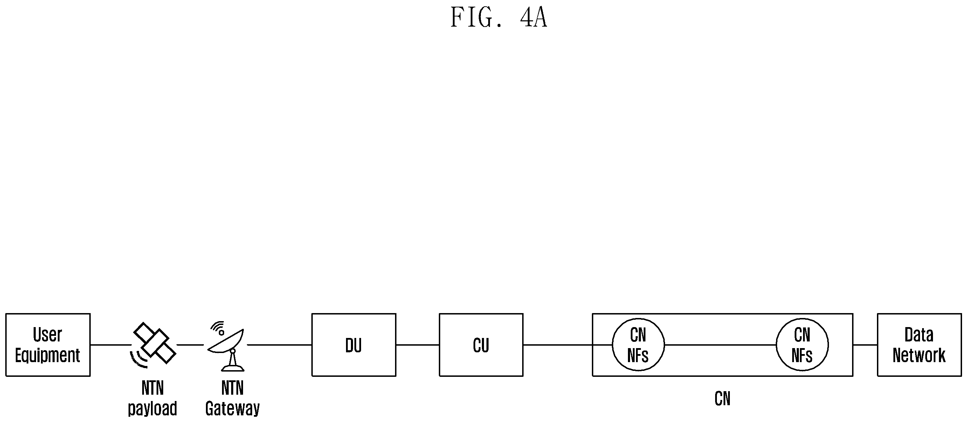

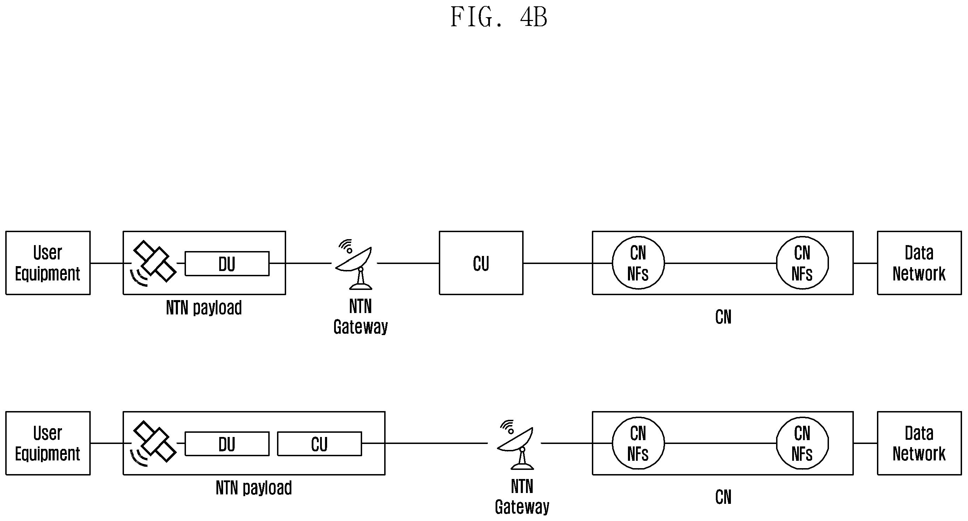

FIG. 4A and FIG. 4B are diagrams illustrating a classification method according to satellite functions of a non-terrestrial network (NTN) to which the present disclosure may be applied.

In a non-terrestrial network (NTN), satellites may be classified into a transparent payload satellite and a regenerative payload satellite according to functions of a satellite.

FIG. 4A is a diagram illustrating a transparent payload satellite. A transparent payload satellite may perform a function of amplifying and forwarding a signal received from a terrestrial network. More specifically, a transparent payload is equipped only with functions for the satellite to perform amplification, RF filtering, and frequency conversion of a signal, so the transparent payload may perform a function of delivering signals to the ground without processing like a reflector/repeater. In this case, the satellite performs a role as a kind of relay node, and cannot perform a role of a base station such as a distributed unit (DU) and/or a central unit (CU) in NR.

Meanwhile, FIG. 4B is a diagram illustrating a regenerative payload satellite. A regenerative payload satellite may also be referred to as an On-Board Processing (OBP) payload satellite. A regenerative payload satellite may be equipped with encoding and/or decoding, modulation and/or demodulation functions, in addition to functions for the satellite to perform amplification, RF filtering, and frequency conversion of a signal. That is, since a regenerative payload satellite is equipped with a processor capable of processing, the regenerative payload satellite may perform a role of a base station such as a DU and/or a CU. As illustrated in FIG. 4B, in case of a regenerative payload satellite, only a DU is

mounted on a satellite, and a CU may be included on the ground. Alternatively, both a DU and a CU may be included in a regenerative payload satellite.

The present disclosure is applicable to a transparent payload satellite. In addition, the present disclosure is also applicable to a regenerative payload in which only a DU is mounted on a satellite and a CU exists on the ground, and may also be applied to a regenerative payload satellite in which both a DU and a CU are mounted on a satellite.

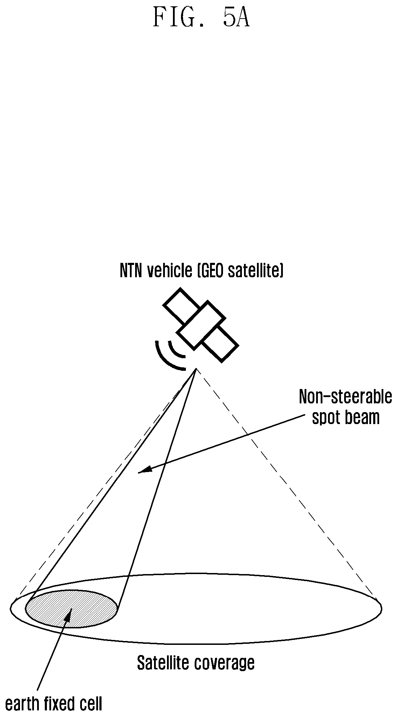

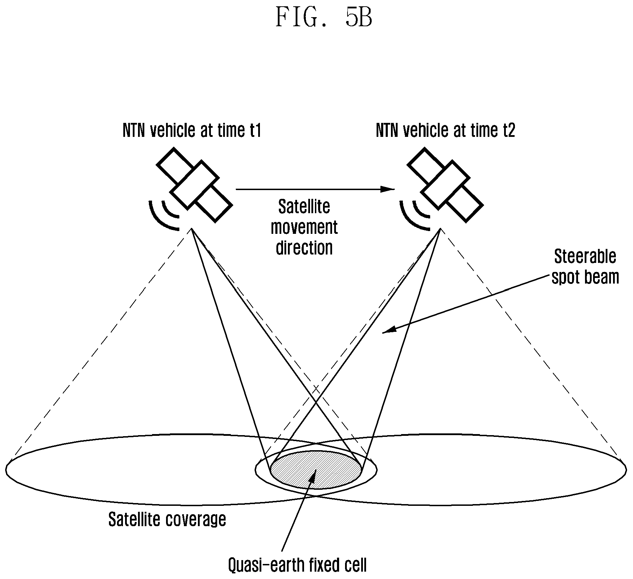

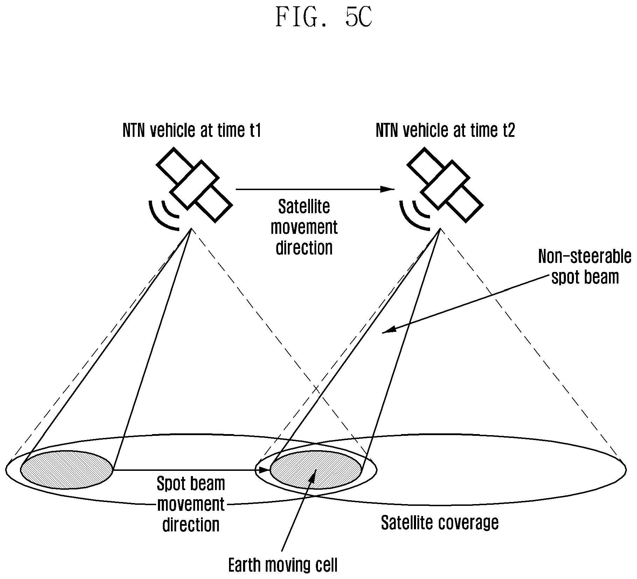

FIG. 5A, FIG. 5B, and FIG. 5C are diagrams illustrating an earth fixed cell, a quasi-earth fixed cell, and an earth moving cell of a non-terrestrial network (NTN) to which the present disclosure may be applied.

In a non-terrestrial network (NTN), a satellite cell, which is a unit for managing a terminal, may be formed through a spot beam emitted from a satellite. Since low earth orbit satellites move along a predetermined orbit at a very fast speed, a satellite coverage where a satellite can communicate with a terminal also moves along with a satellite. Therefore, a method of operating a satellite cell may vary according to a method of configuring a satellite cell.

According to one embodiment of the present disclosure, an operating method of a satellite cell in an NTN may be classified into an earth fixed cell, a quasi-earth fixed cell, and an earth moving cell.

With reference to FIG. 5A, FIG. 5A is a diagram illustrating an earth fixed cell.

An earth fixed cell is a method of forming a satellite cell that does not move through a satellite in a predetermined area, and is a cell mainly formed by a geostationary earth orbit (GEO) satellite having the same orbit period as the rotation period of the earth. Since an earth fixed cell has a relatively longer time during which one satellite can form a cell than an earth moving cell, it has an advantage in that it can alleviate a phenomenon that may occur due to high mobility of a satellite.

FIG. 5B illustrates a quasi-earth fixed cell, and FIG. 5C is a diagram illustrating an earth moving cell.

A quasi-earth fixed cell and an earth moving cell are methods used when a satellite cell is formed by a satellite whose orbit period is not the same as the rotation period of the earth, such as a medium earth orbit (MEO) satellite or a low earth orbit (LEO) satellite.

A quasi-earth fixed cell is a method of forming a satellite cell in a constant area of the earth's surface. Unlike an earth fixed cell where one satellite can form a constant area 24 hours a day because a GEO satellite does not move relative to the earth's surface, LEO satellites and MEO satellites cannot continuously form a cell in a constant area because they move relative to the earth's surface. In this case, a quasi-earth fixed cell forms a cell in a predetermined area even if a satellite moves relative to the ground by rotating an antenna of a beam forming a cell. In addition, when a satellite cell exists at a location above a maximum antenna rotation angle due to movement of a satellite so that a corresponding satellite cannot form a cell, another neighboring satellite may take over and form a cell at a corresponding location.

Meanwhile, an earth moving cell is mainly used in a satellite structure in which an antenna forming a cell does not rotate (steering) and is always fixed in a perpendicular direction to the horizon, and is a cell in which a satellite cell also has mobility along with movement of a satellite.

The present disclosure is applicable to all of an earth moving cell, a quasi-earth fixed cell, and an earth fixed cell. The present disclosure is not limited to one embodiment, and the present disclosure may be applied even when a satellite cell is configured and operated in another method.

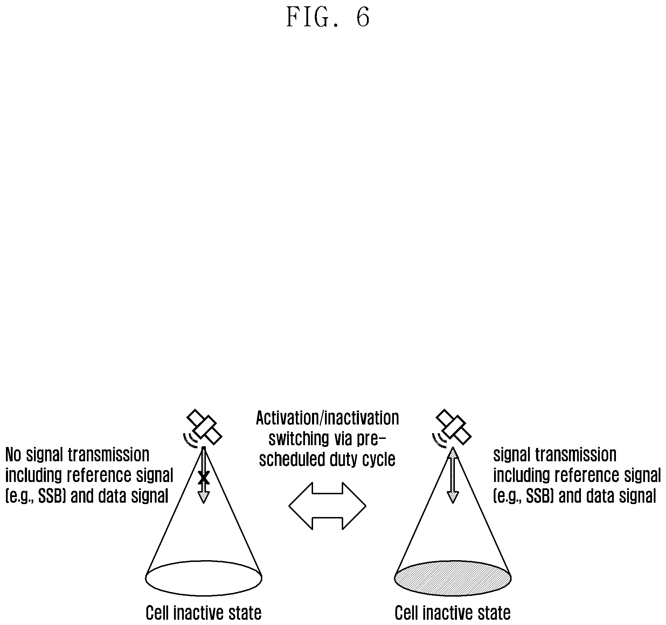

FIG. 6 is a diagram for explaining spot beam scheduling and a state of a cell according to one embodiment of the present disclosure.

In a non-terrestrial network (NTN) according to one embodiment of the present disclosure, a satellite cell (or NTN cell) which is a unit for managing a terminal may be formed through a spot beam emitted from a satellite. Hereinafter, such may be referred to as "an NTN cell supporting beam scheduling".

Hereinafter, an NTN cell supporting beam scheduling according to one embodiment of the present disclosure may mean a cell that switches to an activation state or a inactivation state when a satellite network operates a cell according to beam scheduling ("spot beam scheduling", "spot beam hopping", or "beam hopping" may be referred to). A satellite cell may be used interchangeably with terms such as a satellite cell for managing a terminal in an NTN, a cell supporting an NTN, a satellite cell, an NTN cell, or a cell.

Spot beam scheduling or spot beam hopping according to one embodiment of the present disclosure may mean an antenna array operating only for some spot beams. Hereinafter, spot beam scheduling may be used interchangeably with terms such as spot beam hopping, beam scheduling, or beam hopping, and may also be referred to by terms having the same or similar meaning.

More specifically, when spot beam scheduling or spot beam hopping is applied, it may dynamically operate an activation state and an inactivation (or a deactivation) state of a specific spot beam according to time, without activating all spot beams that a satellite can form.

A spot beam scheduling technology may be applied to a broadcasting satellite centered on a geostationary earth orbit (GEO) satellite, and may also be applied to a satellite network utilizing a low earth orbit (LEO) satellite. In addition, a spot beam scheduling or spot beam hopping technology may be applied to a satellite forming a non-terrestrial network of 5G and/or 6G thereafter.

Purposes of using spot beam scheduling or spot beam hopping are mainly as follows.

First, power consumption due to limited available power of a satellite may be reduced.

A satellite performs various operations based on power generated by utilizing an onboard solar panel. Even in case of a communication satellite, various operations may be simultaneously performed in addition to operations for communication purposes for a user, such as location measurement and correction of a satellite, satellite attitude measurement and attitude correction, and communication with a Telemetry, Tracking and Control (TT&C) gateway for satellite status reporting, and performing these operations should be resolved solely by power generated from a solar panel.

There is a limit to available power of a satellite to form all spot beams that can be formed in an area serviced by a satellite, and a limit of available power is a problem that is difficult to resolve in the near future under circumstances where a hardware upgrade of a satellite is impossible.

In order to derive maximum performance within such a limited available power range, a spot beam hopping technology may be applied. That is, by scheduling a time point of forming spot beams of a satellite so that only a part of spot beams are simultaneously operated, the number of spot beams generated simultaneously may be reduced, and power consumed to form spot beams in a satellite may be reduced.

Second, system throughput of a satellite network may be improved.

A satellite services a wide area, and one satellite may form tens or hundreds of satellite cells.

Some satellite cells may be low traffic cells, and other cells may be high traffic cells. More specifically, a low traffic cell means a cell in which the number of users and traffic do not exist or are extremely small, and a high traffic cell is a cell in charge of urban and/or sub-urban areas, and may mean a cell in which the number of users and traffic are large. In this case, when a low traffic cell and a high traffic cell are formed for the same time without spot beam scheduling, a low traffic cell causes waste of power and wireless resources, whereas a high traffic cell may cause performance degradation due to lack of power and wireless resources.

Therefore, a spot beam forming a cell having a large number of users and large traffic is configured to be formed for a relatively long period of time, so that power and wireless resources of a satellite may be configured to be used in a corresponding cell for a long period of time. Accordingly, total throughput of a satellite network may be improved.

Next, a state (or operation) of each cell when spot beam scheduling is configured will be described. When spot beam scheduling is configured, a cell (or NTN cell) may repeatedly perform an operation of being activated and inactivated for a predetermined period of time by beam scheduling. A cycle of repeating activation/inactivation of a cell for a predetermined period of time is referred to as a duty cycle, and a corresponding duty cycle may be determined by a satellite network management server that manages a satellite network.

When a cell is in a cell activation state, that cell may transmit and receive signals including a reference signal (for example, a synchronization signal block (SSB)) and data. Meanwhile, when a cell is in a cell inactive state, that cell cannot transmit and receive signals including a reference signal and data.

In a conventional NTN-based technology, when a terminal does not receive a signal from an NTN at a predetermined interval or does not receive a reference signal (SSB) capable of synchronizing with a cell, it is determined as a situation where access to a corresponding cell is impossible. In case of an existing terrestrial network, a case where it is determined as a situation where access to a cell is impossible includes situations such as an area where it is difficult to receive a signal (e.g., underground, radio wave shielding environment, etc.), when a terminal is turned on while overseas, etc., and an operation corresponding thereto is performed. That is, a situation where an SSB cannot be received in a terrestrial network is determined as a situation where a cell accessed by a terminal has disappeared, and a cell reselection process for searching for a new accessible cell around is performed.

Since 3GPP NTN was designed without consideration for beam scheduling (or beam hopping), despite being in an intended signal non-reception state due to beam scheduling (or beam hopping), a terminal determines that such is as an unintended signal non-reception state and then performs cell reselection. In a cell reselection process, since a terminal searches for even neighboring cells, neighboring frequencies, or neighboring RATs (Radio Access Technology), such task uses a lot of power from a terminal standpoint. In conclusion, a beam scheduling technology in an NTN is intended to efficiently reduce power consumption of a satellite, but from a terminal standpoint, a problem of increasing power consumption occurs.

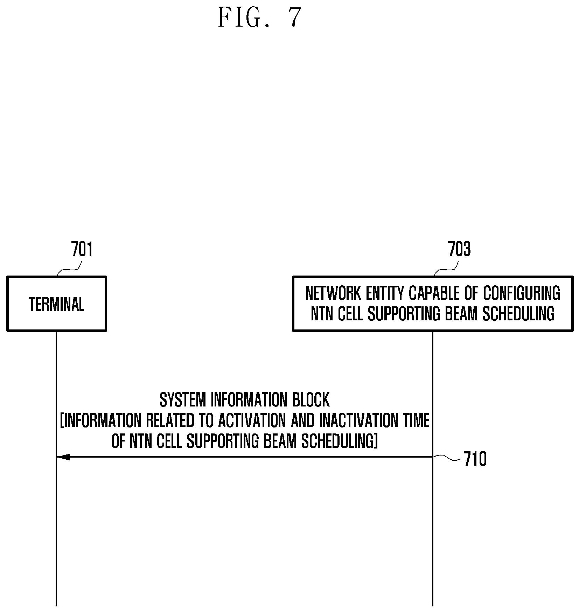

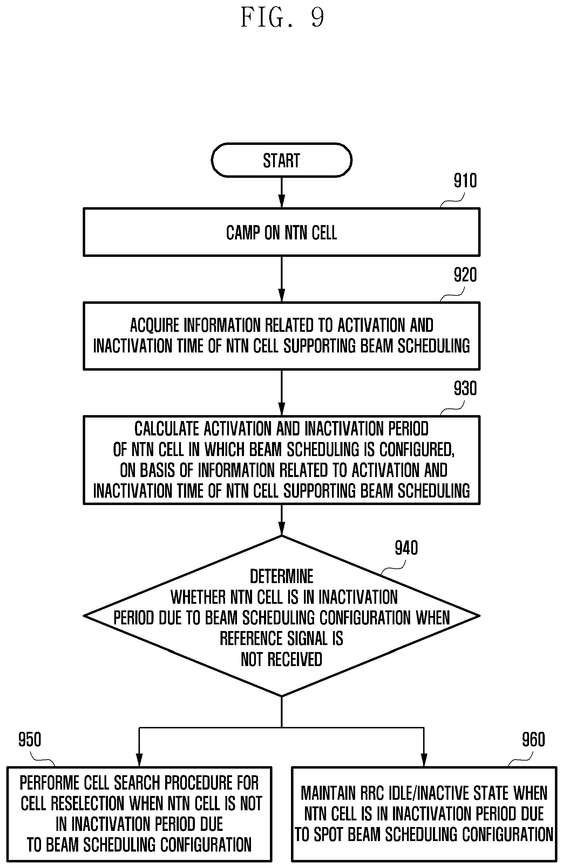

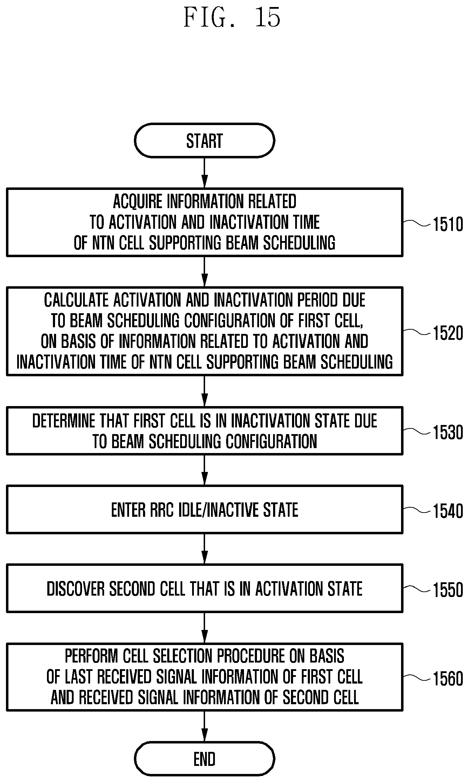

In order to solve these problems, the present disclosure proposes a method for delivering activation and inactivation related time information of an NTN cell supporting beam scheduling through an SIB (FIG. 7 to FIG. 8), a method of operating an RRC idle/inactive state of a terminal upon inactivation due to configuration of satellite cell beam scheduling (FIG. 9 to FIG. 14), and a method for preventing unnecessary cell selection due to activation of another satellite cell upon inactivation due to configuration of satellite cell beam scheduling (FIG. 15 to FIG. 16).

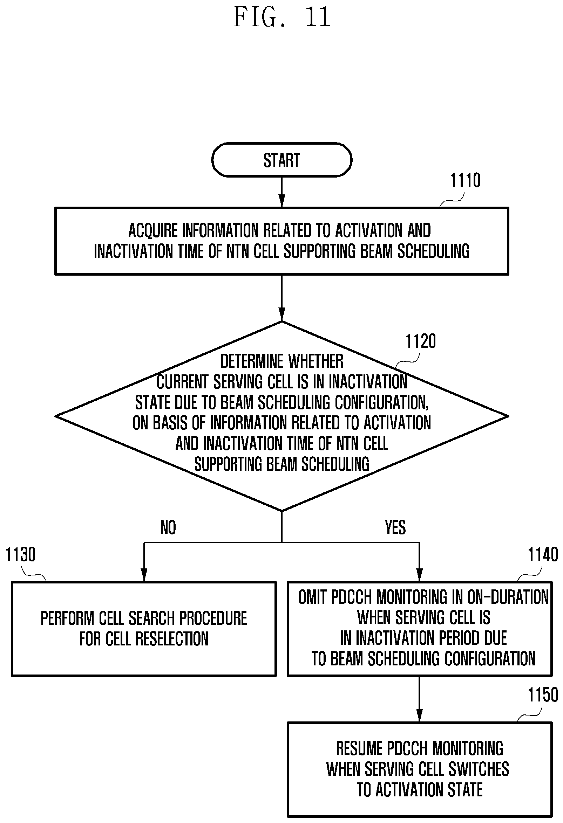

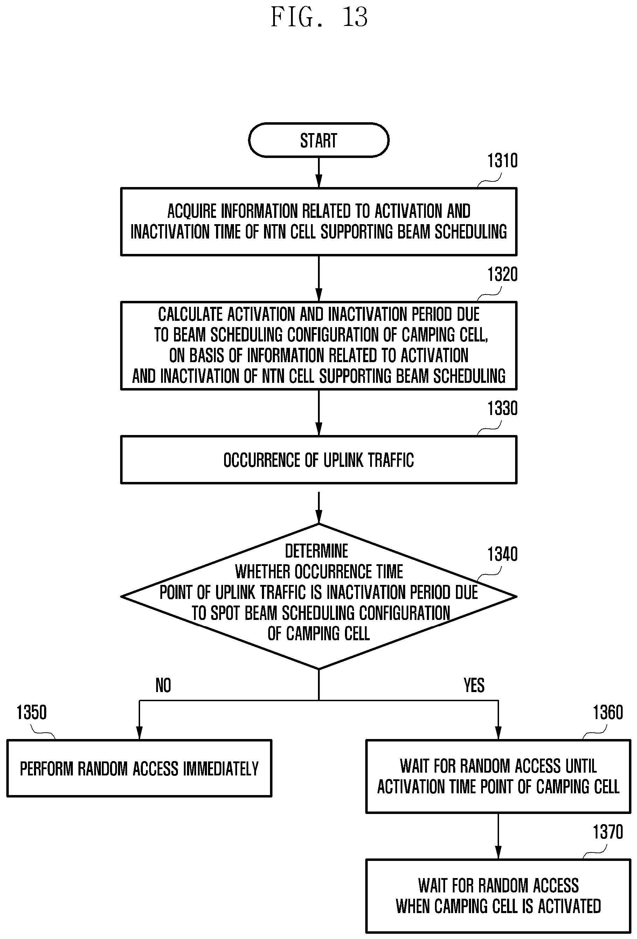

As a method of operating an RRC idle/inactive state, a method for maintaining an RRC idle/inactive state of a terminal upon inactivation due to configuration of an NTN cell beam scheduling (FIG. 9 to FIG. 10), a physical downlink control channel (PDCCH) paging skipping method in an idle/inactive state terminal in an inactivation state due to configuration of an NTN cell beam scheduling (FIG. 11 to FIG. 12), and a method for delaying random access (RACH procedure) when uplink traffic occurs (FIG. 13 to FIG. 14) are proposed.

FIG. 7 is a diagram illustrating a procedure in which a terminal acquires information related to spot beam

scheduling according to one embodiment of the present disclosure.

More specifically, FIG. 7 is a diagram for explaining acquiring information related to activation and inactivation time of an NTN cell supporting beam scheduling, and information included in the information related to activation and inactivation time of an NTN cell supporting beam scheduling.

In a non-terrestrial network (NTN) according to one embodiment of the present disclosure, a satellite cell (or NTN cell) which is a unit for managing a terminal may be formed through a spot beam emitted from a satellite. Hereinafter, such may be referred to as "an NTN cell supporting beam scheduling".

Hereinafter, beam scheduling may be used interchangeably with terms such as spot beam hopping, spot beam scheduling, or beam hopping, and may also be referred to by terms having the same or similar meaning.

According to one embodiment of the present disclosure, a terminal needs to acquire information related to spot beam scheduling of a satellite (or it may be referred to as "information related to intentional activation and inactivation of an NTN cell"). The present disclosure proposes a method for delivering information related to intentional activation and inactivation of a non-terrestrial network (NTN) cell that is connectable to a terminal and is camping. Intentional activation and inactivation may mean activation and inactivation of an NTN cell due to beam scheduling configuration.

The information related to intentional activation and inactivation of the NTN cell may include beam hopping applicable information, beam hopping pattern information, and beam hopping timing-related information, and is not limited thereto, and may include all information related to time and cycle related information of intentional activation and inactivation (hereinafter, it may be referred to as "information related to activation and inactivation time of an NTN cell supporting beam scheduling"). In particular, the present disclosure proposes a method for delivering information related to activation and inactivation time of an NTN cell supporting beam scheduling.

A device (or "entity") supporting a non-terrestrial network (NTN) according to one embodiment of the present disclosure may include a terminal portable by a user (for example, a user equipment (UE) such as a smartphone may be included), a very small aperture terminal (VSAT) equipped with a parabolic antenna or a phase array antenna, or a low-power device (for example, an Internet of Things device, or a sensor may be included). Hereinafter, for convenience of description, description will be focused on a terminal, but the scope of rights of the present invention is not limited thereto.

The network entity supporting the NTN may include both a satellite supporting an NTN, or a base station connected to a satellite supporting an NTN. For example, in case of a regenerative payload satellite in which a satellite performs the role of a base station, the network entity supporting the NTN may mean a regenerative payload satellite itself. When a satellite is a transparent payload satellite serving as a repeater, the network entity supporting the NTN may mean a base station existing on the ground.

The network entity supporting the NTN is not limited to the embodiments described above, and a network entity supporting an NTN may also be referred to by terms having the same or similar meaning according to configuration of a satellite network.

In addition, the network entity supporting the NTN may include a network entity capable of configuring an NTN cell supporting beam scheduling, and hereinafter, description will be made based on "a network entity capable of configuring an NTN cell supporting beam scheduling".

With reference to FIG. 7, a procedure in which a terminal acquires information related to spot beam scheduling is illustrated. More specifically, a terminal may acquire intentional activation and/or inactivation information of a satellite cell through system information (or a system information block (SIB)).

In step 710, a terminal 701 may receive system information from a network entity 703 supporting a non-terrestrial network (NTN).

The system information may include an SIB (for example, SIB19, SIB32) that is essential for a terminal to receive in order to access an NTN.

The system information may include information related to spot beam scheduling. The information related to spot beam scheduling may include information related to activation and inactivation time of an NTN cell supporting beam scheduling.

A structure in which information related to activation and inactivation of an NTN cell supporting beam scheduling is included in an SIB may be as shown in [Table 1] below. The information related to activation and inactivation of an NTN cell supporting beam scheduling may mean information including at least one of ntn-cellDutycycleStartSfn, ntn-cellActivationInfoList, ntn-CellActivationInfo, activationFinSfn, and inactivationDuration.

```
-- ASN1START
-- TAG-SIB19-START
SIB19-r17 ::= SEQUENCE {
    ntn-Config-r17                      NTN-Config-r17                          OPTIONAL,       -- Need R
    ...,
    lateNonCriticalExtension            OCTET STRING                            OPTIONAL,
    ntn-cellActivationInfoList          NTN-CellActivationInfoList              OPTIONAL,       -- Need R
    ntn-cellDutyCycleStartSfn           INTEGER(0..1023)                        OPTIONAL,       -- Need R
    ...,
    [[
    ntn-NeighCellConfigListExt-v1720    NTN-NeighCellConfigList-r17             OPTIONAL,       -- Need R
    ]]
...,
}

NTN-CellActivationInfoList ::= SEQUENCE (SIZE(1..nrofCellActivationInfo))  OF NTN-CellActivationInfo

NTN-CellActivationInfo ::= SEQUENCE {
   activationFinSfn                    INTEGER(0..1023)                        OPTIONAL,       -- Need R
   inactivationDuration                INTEGER(0..255)                         OPTIONAL,       -- Need R
}
-- TAG-SIB19-STOP
-- ASN1STOP
```

System information according to one embodiment of the present disclosure may include the following information (or information element, IE). For reference, the following information may be delivered as a system frame number (SFN) because a terminal and a base station are in a synchronous situation when a cell is activated, and may be delivered as an absolute time radio frame number because a terminal and a base station are in an asynchronous situation when a cell is inactivated.

- ntn-cellDutycycleStartSfn: System Frame Number (SFN) of a start time point of a duty cycle of cell activation and inactivation
- ntn-cellActivationInfoList: A list of bundles of one continuous activation period and one continuous inactivation period based on an end time point of an activation period, or a bundle list of ntn-CellActivationInfo
- ntn-CellActivationInfo: A bundle of one continuous activation period and one continuous inactivation period based on an end time point of an activation period, which may include activationFinSfn and inactivationDuration
- activationFinSfn: System Frame Number (SFN) of an end time point of an activation period
- inactivationDuration: A Radio Frame Number expressing a period of a inactivation period

A terminal according to one embodiment of the present disclosure may calculate a repeated activation and inactivation pattern of an NTN cell after receiving the system information (or information related to activation and inactivation time of an NTN cell supporting beam scheduling). Thereafter, a terminal may continuously use the system information for calculation until it moves to another cell, and may perform an operation according to one embodiment of the present disclosure even if it does not additionally receive information related to activation and inactivation time of an NTN cell supporting beam scheduling. In particular, a terminal may calculate and apply a repeated activation and inactivation pattern of an NTN cell after performing initial access to a cell.

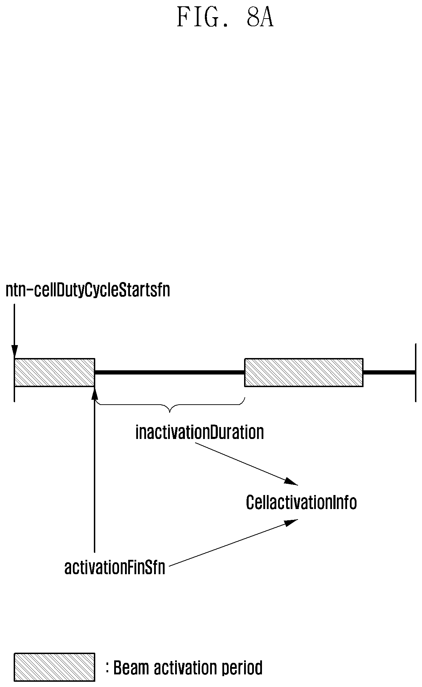

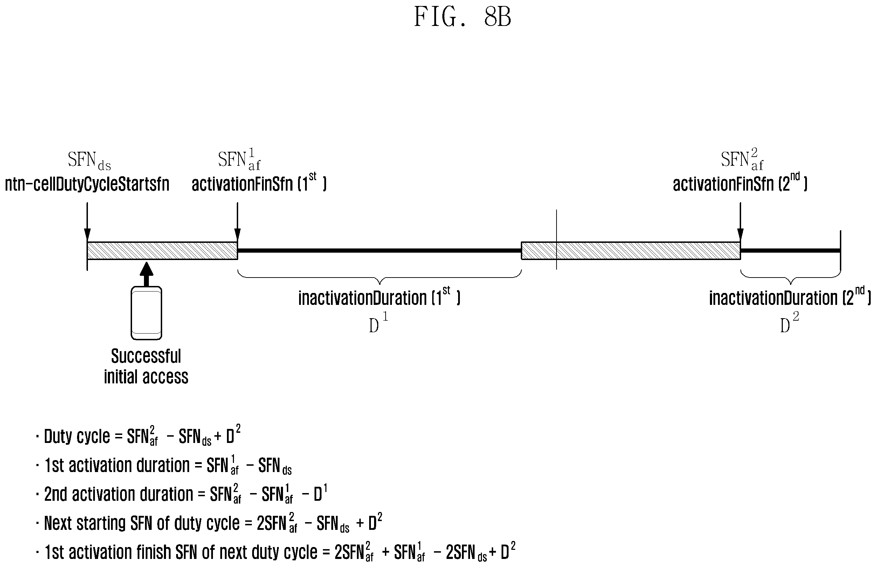

Hereinafter, a method for calculating an activation and inactivation cycle of an NTN cell based on information related to activation and inactivation time of an NTN cell supporting beam scheduling will be described in FIG. 8A and FIG. 8B.

FIG. 8A and FIG. 8B are diagrams illustrating a method in which a terminal calculates an activation and inactivation pattern of a non-terrestrial network (NTN) cell in which beam scheduling is configured, according to one embodiment of the present disclosure.

With reference to FIG. 8A, this is a diagram for explaining information required for a terminal to calculate an activation and inactivation pattern (or an activation and inactivation cycle of an NTN cell, or an activation and inactivation time of an NTN cell) of a non-terrestrial network (NTN) cell due to beam scheduling configuration.

- ntn-cellDutycycleStartSfn: Start time information of a duty cycle
- CellActivationInfo: A set of activationFinSfn and inactivationDuration
- activationFinSfn: Activation period end time information
- inactivationDuration: Inactivation period information

With reference to FIG. 8B, this is a diagram for explaining a method in which a terminal calculates an activation and inactivation pattern of an NTN cell due to beam scheduling configuration.

Information for calculating an activation and inactivation period of an NTN cell due to beam scheduling configuration is as follows.

- $SFN_{ds}$:Start time info of duty cycle, Can be known via ntn-cellDutycycleStartSfn.
- $SFN_{af}^{1}$ : 1st activation period finish time info, Can be known via activationFinSfn.

- $D^1$: 1st inactivation period-info, Can be known via inactivationDuration.
- $SFN_{af}^2$ : 2nd activation period finish time info, Can be known via activationFinSfn.
- $D^2$: 2nd inactivation period info, Can be known via inactivationDuration.

For reference, first activation period end time information (activationFinSfn) and first inactivation period information (inactivationDuration) may be included in one ntn-CellActivationInfo. In addition, second activation period end time information (activationFinSfn) and second inactivation period information (inactivationDuration) may be included in one ntn-CellActivationInfo. A list of such ntn-CellActivationInfo may be delivered in a form of ntn-cellActivationInfoList.

A method for calculating an activation and inactivation period of an NTN cell may be as follows.

-

$$Duty\ cycle = SFN_{af}^2 - SFN_{ds} + D^2$$

-

$$1st\ activation\ duration = SFN_{af}^1 - SFN_{ds}$$

-

$$2nd\ activation\ duration = SFN_{af}^2 - SFN_{af}^1 - D^1$$

-

$$Next\ starting\ SFN\ of\ duty\ cycle = 2SFN_{af}^2 - SFN_{ds} + D^2$$

-

$$1st\ activation\ finish\ SFN\ of\ next\ duty\ cycle = 2SFN_{af}^2 + SFN_{af}^1 - 2SFN_{ds} + D^2$$

$D^2$

In FIG. 8B, a calculation method based on two activation and inactivation cycles of an NTN cell has been described, but this is only one embodiment, and the scope of rights of the present invention is not limited thereto.

Hereinafter, a method of operating an RRC idle/inactive state of a terminal upon inactivation due to configuration of satellite cell beam scheduling will be described.

FIG. 9 is a flowchart illustrating a sequence of a method in which a terminal maintains a radio resource control (RRC) idle and inactive state when inactivation occurs due to beam scheduling configuration of a non-terrestrial network (NTN) cell, according to one embodiment of the present disclosure.

With reference to FIG. 9, this is a flowchart of a method for maintaining a radio resource control (RRC) idle or inactive state of a terminal according to whether a non-terrestrial network (NTN) cell is in an activation or inactivation state due to beam scheduling configuration.

Hereinafter, whether an NTN cell is in an activation or inactivation state is described on a premise that it is an activation and inactivation state due to beam scheduling configuration.

When spot beam scheduling (or spot beam hopping) is configured, an inactivation state of a specific NTN cell is not a state where a cell has disappeared due to an unintended reason, but a state temporarily inactivated by an intention of a satellite network. Therefore, performing cell reselection in this case may be an unnecessary operation. In particular, a cell in an NTN has a very large cell size, with a diameter of about 20 km to 100 km, compared to a cell in a terrestrial network. In addition, since a large majority of terminals can connect to only one NTN cell, when only one cell is connectable, cell reselection performed upon inactivation of a cell is unnecessary, and increased power consumption due to a cell reselection procedure is also inefficient.

In order to solve these problems, the present disclosure proposes a method for maintaining an RRC idle/inactive

state when an NTN cell is in an inactivation state due to beam scheduling configuration. Since an inactivation state of an NTN cell is an intentional inactivation of a cell in a satellite network, maintaining an RRC idle or inactive state is more advantageous in terms of power consumption of a terminal than a terminal performing a cell reselection procedure.

Specific operations proposed in the present disclosure are as follows.

In step 910, a terminal may camp on an NTN cell.

In step 920, the terminal may acquire information related to activation and inactivation time of an NTN cell supporting beam scheduling.

More specifically, the terminal may acquire information related to activation and inactivation time of an NTN cell supporting beam scheduling by receiving system information (for example, SIB19, SIB32) from a network entity capable of configuring an NTN cell supporting beam scheduling. When information related to activation and inactivation time of an NTN cell supporting beam scheduling is included in the system information, the terminal may determine that an activation and inactivation function is applied to a currently connected NTN cell.

In step 930, the terminal may calculate an activation and inactivation period of a connectable NTN cell based on the information related to activation and inactivation time of an NTN cell supporting beam scheduling.

More specifically, a terminal may calculate an activation and inactivation period by acquiring information related to activation and inactivation of a camping NTN cell in which connectable beam scheduling is configured. A calculation method may follow the method described above.

Thereafter, in step 940, when a reference signal is not received, the terminal may determine whether a camping NTN cell, which was determined to be connectable, is in an inactivation period due to beam scheduling configuration. The reference signal may include a synchronization signal block (SSB) or a reference signal.

If the connected cell is not in an inactivation period due to beam scheduling configuration, in step 950, the terminal may perform a cell search procedure for cell reselection.

If it is determined that the connected cell is in an inactivation period due to beam scheduling configuration, in step 960, the terminal may maintain an RRC idle or inactive state.

More specifically, the terminal maintains an RRC idle or inactive state, and may omit a reception process of an SSB, a master information block (MIB), or a system information block (SIB). In addition, the terminal may also perform a discontinuous reception (DRX) operation.

In addition, the terminal may store and then reuse measurement information of a closest past from a time point of failing to receive a signal of a cell. That is, even if cell signal reception of a connected cell is impossible, a terminal maintains the same idle/inactive state as continuously receiving a signal of a corresponding cell, and may perform most of corresponding functions (for example, neighbor cell measurement). However, in this case, a terminal does not perform a PDCCH monitoring of paging occasion function, which will be described in detail below.

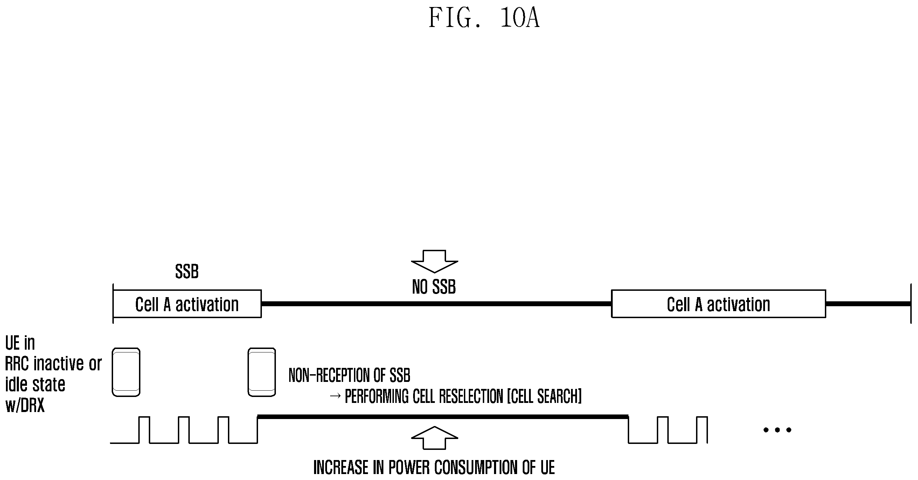

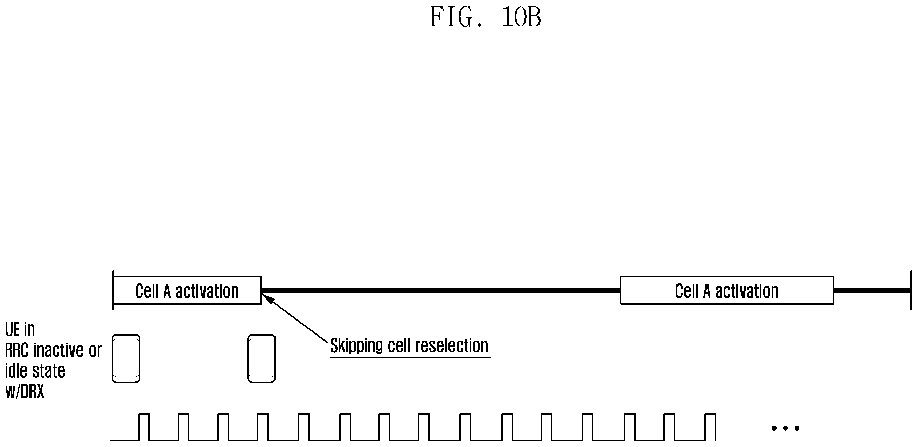

FIG. 10A and 10B are diagrams illustrating an operation in which a terminal maintains a radio resource control (RRC) idle and inactive state when inactivation occurs due to beam scheduling configuration of a non-terrestrial network (NTN) cell, according to one embodiment of the present disclosure.

FIG. 10A illustrates an operation of a terminal according to the related art, and FIG. 10B illustrates an operation of a terminal according to a method of one embodiment of the present disclosure.

With reference to FIG. 10A, a terminal cannot know information related to activation/inactivation due to spot beam scheduling of a camping NTN cell (or information related to activation and inactivation time of an NTN cell supporting beam scheduling). Therefore, when an NTN cell on which a terminal accesses and camps performs activation/inactivation at a predetermined cycle, if the NTN cell enters an inactivation state, a terminal cannot receive an SSB of a cell. Since a terminal does not receive an SSB, the terminal may determine a cell missing state. That is, a terminal determines an unintended cell inaccessible situation, and performs a cell reselection procedure from a moment when an SSB cannot be received. In addition, an additional procedure such as measuring neighboring cells or neighboring radio access technology (RAT) signals is performed. Since searching for (or finding) a neighboring accessible cell is a priority for a terminal, it performs a cell search procedure while actively using power of a terminal, which quickly consumes available power of the terminal.

In summary, a terminal according to the related art performs a cell reselection process accompanied by a cell search despite being an intentional inactivation situation of an NTN due to spot beam scheduling, thereby consuming a very large amount of power compared to an idle/inactive state.

With reference to FIG. 10B, a terminal according to one embodiment of the present disclosure maintains an RRC idle/inactive state when determining that it is an inactivation period of an NTN cell due to beam scheduling configuration, and may not perform an unnecessary cell reselection procedure.

When a reference signal cannot be acquired, a terminal according to one embodiment of the present disclosure may determine whether a corresponding cell is in an inactivation period due to beam scheduling configuration. If it is determined that a corresponding cell is in an inactivation period due to beam scheduling configuration, a terminal may apply the same mobility technique as mobility of a terminal camping on an existing cell without performing a cell reselection procedure. For example, an idle mobility operation of a terminal or a discontinuous reception (DRX) operation may be

performed. This is a situation where a satellite network intentionally inactivates a cell (or an NTN cell), because there is no need to unnecessarily perform a cell reselection procedure. Through such an operation, a terminal may reduce unnecessary power consumption.

FIG. 11 is a flowchart explaining a sequence in which a terminal omits physical downlink control channel (PDCCH) monitoring when inactivation occurs due to beam scheduling configuration of a non-terrestrial network (NTN) cell, according to one embodiment of the present disclosure.

According to one embodiment of the present disclosure, a method for omitting physical downlink control channel (PDCCH) monitoring according to whether a non-terrestrial network (NTN) cell supporting beam scheduling is in an activation or inactivation state is proposed.

Hereinafter, whether an NTN cell is in an activation or inactivation state is described on a premise that it is an activation and inactivation state due to beam scheduling configuration.

More specifically, a terminal in an idle/inactive state during a cell inactivation period due to beam scheduling (or beam hopping) cannot use an uplink and/or a downlink. That is, when a cell is in an inactivation state, a situation where a terminal in a camping state receives a paging message from a currently camping cell does not occur.

In an existing terrestrial network, a terminal in an idle/inactive state periodically monitored a paging occasion of a PDCCH for receiving a paging message in order to recognize a time point of downlink traffic occurrence. However, since transmission and reception of a paging message are impossible during a cell inactivation period by beam scheduling, a process of monitoring a paging occasion of a PDCCH is unnecessary, wasting power. In order to solve these problems, specific operations proposed in the present disclosure are as follows.

In step 1110, a terminal may acquire information related to activation and inactivation time of an NTN cell supporting beam scheduling. More specifically, the terminal may receive system information (for example, SIB19, SIB32) from a network entity capable of configuring an NTN cell supporting beam scheduling to acquire information related to activation and inactivation time of an NTN cell supporting beam scheduling.

In step 1120, the terminal may determine whether a current serving cell is in an inactivation state due to beam scheduling configuration based on the information related to activation and inactivation time of an NTN cell supporting beam scheduling.

In step 1130, if a serving cell is not in an inactivation state due to beam scheduling configuration, the terminal may perform a cell search procedure for cell reselection.

In step 1140, if the serving cell is in an inactivation state due to beam scheduling configuration, the terminal may omit PDCCH monitoring in an on-duration.

More specifically, when a serving cell is in a cell inactivation state due to spot beam scheduling, the terminal may determine whether a discontinuous reception (DRX) operates. When a DRX of a terminal operates, a terminal performs various functions during an on-duration, but may enter a sleep state during an off-duration. Thereafter, a terminal should perform PDCCH monitoring for paging in an on-duration situation. In this case, a terminal may omit PDCCH monitoring for paging even in a DRX on-duration in an inactivation period of a serving cell.

Thereafter, in step 1150, when the serving cell switches to an activation state, the terminal may resume PDCCH monitoring.

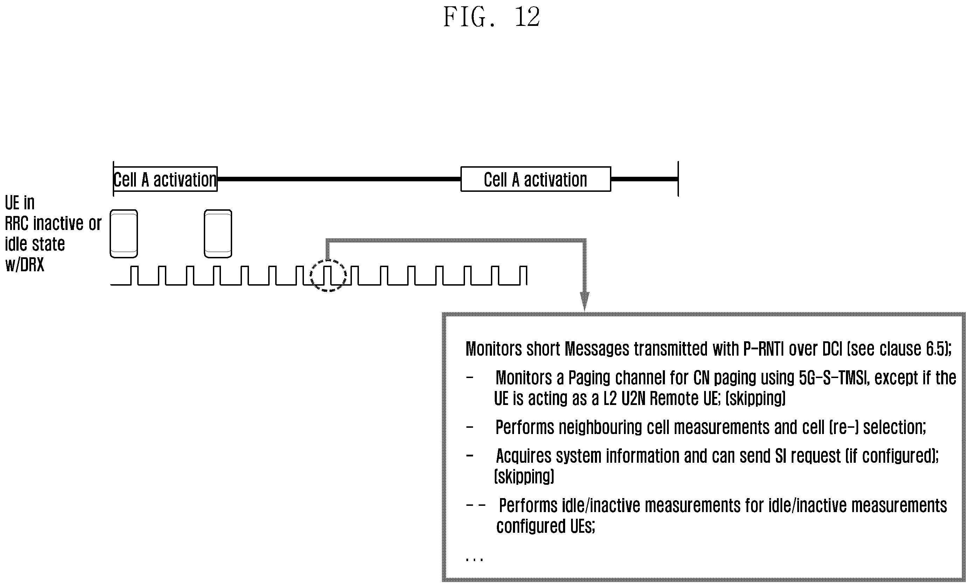

FIG. 12 is a diagram illustrating a method in which a terminal omits physical downlink control channel (PDCCH) monitoring when inactivation occurs due to beam scheduling configuration of a non-terrestrial network (NTN) cell, according to one embodiment of the present disclosure.

According to one embodiment of the present disclosure, a terminal in a radio resource control (RRC) idle/inactive state may perform a discontinuous reception (DRX) operation. The terminal performing the DRX operation may determine whether a current serving NTN cell is in a cell inactivation state due to spot beam scheduling.

If a current serving cell corresponds to a cell inactivation period due to beam scheduling, a terminal may omit a part for monitoring a paging channel for physical downlink control channel (PDCCH) paging during a period of a DRX on-duration.

FIG. 13 is a flowchart explaining a method in which a terminal delays transmission of uplink traffic when inactivation occurs due to beam scheduling configuration of a non-terrestrial network (NTN) cell, according to one embodiment of the present disclosure.

According to one embodiment of the present disclosure, a method for suspending a random access procedure for uplink traffic transmission according to whether an NTN cell supporting beam scheduling is in an activation or inactivation state due to beam scheduling configuration is proposed. More specifically, a method for not performing a random access procedure in an inactivation period of a non-terrestrial network (NTN) cell by beam scheduling is proposed.

Hereinafter, whether an NTN cell is in an activation or inactivation state is described on a premise that it is an activation and inactivation state due to beam scheduling configuration.

In case of an existing terrestrial network, when uplink traffic occurs in a terminal, the terminal attempts to access a camping cell immediately upon occurrence of traffic in order to minimize a delay of an uplink. A terminal performs a random access procedure (RACH procedure) for accessing a cell, and when a corresponding process is successfully performed,

the terminal may perform uplink and/or downlink communication.

However, according to the related art, when an NTN cell is in an inactivation state due to beam scheduling configuration, even if a terminal transmits a signal for RA, a network entity supporting an NTN cannot receive a signal transmitted by the terminal. Therefore, a continuous random access procedure failure occurs between a terminal and a base station during an inactivation period of an NTN cell.

The present disclosure proposes a method for delaying a random access procedure for uplink traffic transmission in order to prevent a continuous random access procedure failure. Specific operations proposed in the present disclosure are as follows.

In step 1310, a terminal may acquire information related to activation and inactivation time of an NTN cell supporting beam scheduling. More specifically, the terminal may receive system information from a network entity capable of configuring an NTN cell supporting beam scheduling to acquire information related to activation and inactivation time of an NTN cell supporting beam scheduling.

In step 1320, the terminal may calculate an activation and inactivation period of a camping cell based on the information related to activation and inactivation time of an NTN cell supporting beam scheduling. More specifically, the terminal may calculate a cell activation and inactivation period of a currently camping cell due to beam scheduling.

In step 1330, uplink traffic may occur in a terminal.

In step 1340, the terminal may determine whether an occurrence time point of the uplink traffic is an inactivation period due to beam scheduling configuration of a camping cell.

In step 1350, if an uplink traffic occurrence time point is not an inactivation period due to beam scheduling configuration of a camping cell, the terminal may immediately perform a random access procedure for transmitting the uplink traffic.

In step 1360, if an uplink traffic occurrence time point is an inactivation period due to beam scheduling configuration of a camping cell, the terminal may wait for a random access procedure until switching to an activation state of a camping cell.

More specifically, when uplink traffic occurs in a terminal in an RRC idle/inactive state and an uplink traffic occurrence time point is an inactivation period by beam scheduling of a camping cell, a random access procedure is not performed at an uplink traffic occurrence time point. Thereafter, the terminal may change a random access procedure to be performed at an activation time point of a camping NTN cell of a closest future from a corresponding time point.

In step 1370, when the camping cell enters an activation state, the terminal may perform a random access procedure.

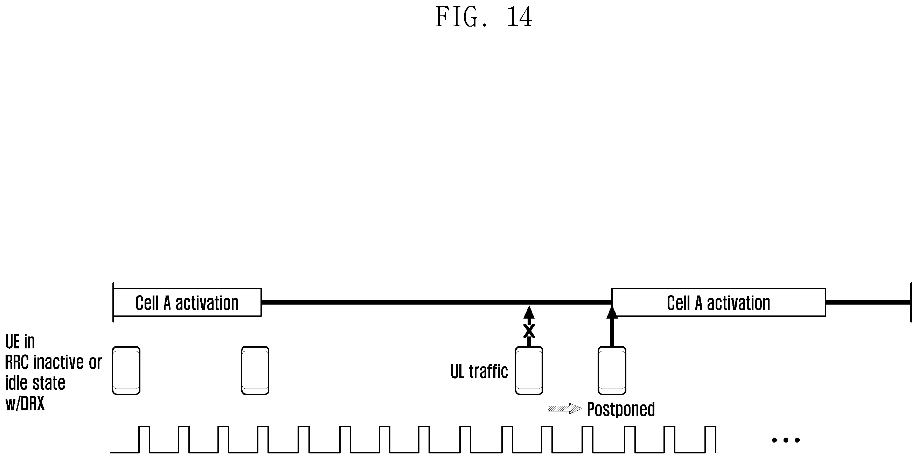

FIG. 14 is a diagram illustrating an operation in which a terminal delays transmission of uplink traffic when inactivation occurs due to beam scheduling configuration of a non-terrestrial network (NTN) cell, according to one embodiment of the present disclosure.

According to one embodiment of the present disclosure, a terminal may determine whether uplink traffic has occurred in a radio resource control (RRC) idle/inactive state. When uplink traffic occurs, the terminal may determine whether an NTN cell is in an activation state.

If the NTN cell is in an activation state, a random access procedure may be performed immediately.

On the other hand, when a current NTN cell is in an inactivation state due to beam scheduling configuration, the terminal may postpone a random access procedure until a cell switches to an activation state, and when the cell switches to an activation state, a random access procedure for transmitting uplink traffic may be performed.

FIG. 15 is a flowchart explaining a sequence of performing cell reselection when inactivation occurs due to configuration of beam scheduling of a non-terrestrial network (NTN) cell, according to one embodiment of the present disclosure.

According to one embodiment of the present disclosure, a method for preventing a ping-pong phenomenon in a situation where at least two non-terrestrial network (NTN) cells coexist according to whether a cell is in an activation or inactivation state is proposed.

According to the related art, when a terminal in an RRC idle/inactive state is in an area where two cells are simultaneously accessible in a terrestrial network, the terminal may change a camping cell based on signal information (for example, signal strength) of the two cells. The signal information include reference signals received power (RSRP) and reference signal received quality (RSRQ). Thereafter, a terminal may perform a decision process for changing a currently camping cell by comparing signal information of a currently camping cell with signal information of neighboring cells.

The procedure may be similarly performed even in case of a cell inactivation period due to beam scheduling. When a currently camping cell and a neighbor cell repeat an activation/inactivation process due to beam scheduling and a currently camping cell and a neighbor cell are not simultaneously activated, a state where only a signal of one cell can be received may be repeated. Therefore, a terminal repeats an operation of unconditionally reselecting a camping cell to an activated cell. This is referred to as a ping-pong phenomenon.

In order to solve these problems, the present disclosure proposes a method for selecting a cell based on signal information upon a last reception of a camping NTN cell signal, when a signal of a currently camping NTN cell is in an

unreceivable state due to a cell inactivation state due to beam scheduling configuration and a signal of a neighbor cell is receivable. Hereinafter, whether an NTN cell is in an activation or inactivation state is described on a premise that it is an activation and inactivation state due to beam scheduling configuration.

Specific operations proposed in the present disclosure are as follows.

In step 1510, a terminal may acquire information related to activation and inactivation time of an NTN cell supporting beam scheduling. More specifically, the terminal may receive system information from a network entity capable of configuring an NTN cell supporting beam scheduling to acquire information related to activation and inactivation time of an NTN cell supporting beam scheduling.

In step 1520, the terminal may calculate an activation and inactivation period due to beam scheduling configuration of a first cell based on the information related to activation and inactivation time of an NTN cell supporting beam scheduling.

More specifically, the first cell may include an NTN cell supporting beam scheduling currently camping. The terminal may calculate an activation and inactivation period of a first cell due to beam scheduling configuration.

In step 1530, the terminal may determine that the first cell is in an inactivation state due to beam scheduling configuration.

In step 1540, the terminal may switch to (or enter) a radio resource control (RRC) idle/inactive state.

In step 1550, the terminal may discover a second cell that is in an activation state. The second cell may include a neighbor cell.

In step 1560, the terminal may perform a cell selection (or cell reselection) procedure based on last received signal information of the first cell and received signal information of the second cell.

More specifically, a currently camping first cell is in a signal unreceivable state due to cell inactivation, and may receive a signal of a second cell which is a neighbor cell. When a terminal receives a signal of the second cell during an inactivation period of the first cell, the terminal may select a cell by comparing last received signal information of the first cell with signal information of the second cell. In this case, last received signal information of the first cell and signal information of the second cell to be compared may include at least any one or more of respective reference signals received power (RSRP), reference signal received quality (RSRQ), and received signal strength indication (RSSI).

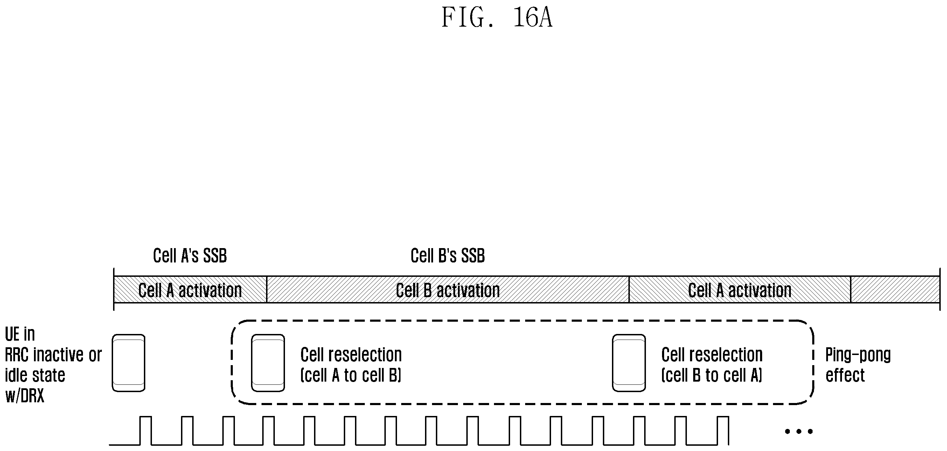

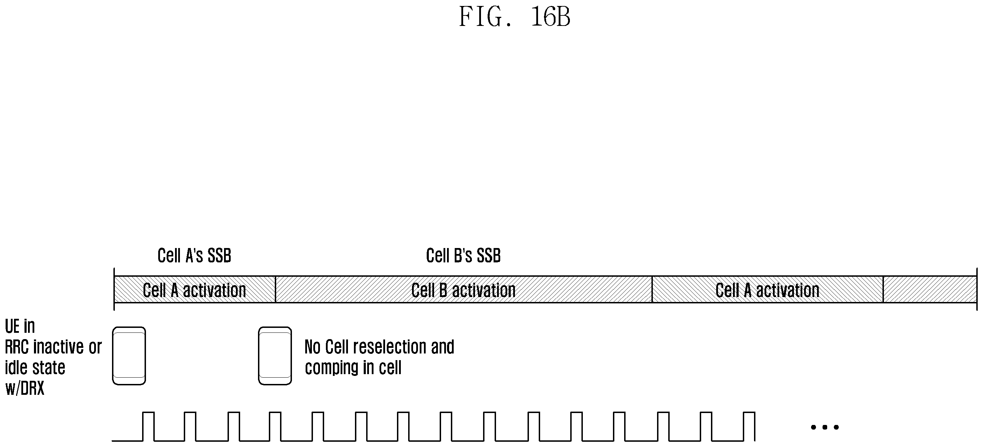

FIG. 16A and 16B are diagrams illustrating an operation in which a terminal suspends a random access procedure when inactivation occurs due to configuration of beam scheduling of a non-terrestrial network (NTN) cell, according to one embodiment of the present disclosure.

FIG. 16A illustrates an operation of a terminal according to the related art, and FIG. 16B illustrates an operation of a terminal according to a method of one embodiment of the present disclosure.

With reference to FIG. 16A, a terminal may be located in an area where two NTN cells are simultaneously accessible in a situation where a beam scheduling technology is applied in a non-terrestrial network (NTN). Any one NTN cell of two NTN cells may be in an inactivation state according to an activation/inactivation cycle of an NTN cell. In this case, a terminal cannot simultaneously receive signals transmitted from two NTN cells, but receives them alternately.

More specifically, a terminal may be located in an area where both cell A and cell B are accessible, and activation time points of cell A and cell B may be scheduled differently. More specifically, when cell A is inactivated, a terminal can no longer receive a synchronization signal block (SSB) received from cell A. Since the terminal did not receive an SSB from cell A, it performs cell reselection. Thereafter, as cell B is activated, cell B starts transmission of an SSB, and a terminal receives an SSB of cell B. The terminal may consider that cell A has disappeared and cell B has appeared, and may perform a necessary process (e.g., Tracking Area Update, etc.) while changing a camping cell from cell A to cell B. Thereafter, when cell B is inactivated, a terminal performs cell reselection, and when cell A is activated, the terminal changes a camping cell to cell A. That is, a terminal in an idle/inactive state located in a region accessible to two or more cells suffers from a ping-pong effect in which a process of setting all accessible cells as a camping cell once is performed every duty cycle.

With reference to FIG. 16B, even if a signal of a currently camping cell is unreceivable due to cell inactivation, a terminal may not change a camping cell immediately.

More specifically, when a signal of a currently camping cell is in an unreceivable state due to cell inactivation due to beam scheduling configuration and a signal of a neighbor cell is received during an inactivation period of a currently camping cell, a terminal may compare signal information upon a last reception of a camping cell signal with a newly received signal of a neighbor cell.

Therefore, when a camping cell (for example, cell A) is inactivated, whether to change a cell may be determined by comparing a last received signal of a camping cell signal with a signal of an activated neighbor cell (for example, cell B).

However, although FIG. 16 has been described based on a case where two cells coexist for explanation of the present invention, the scope of rights of the present invention is not limited thereto, and a case where two or more exist may also be included in the scope of rights of the present invention.

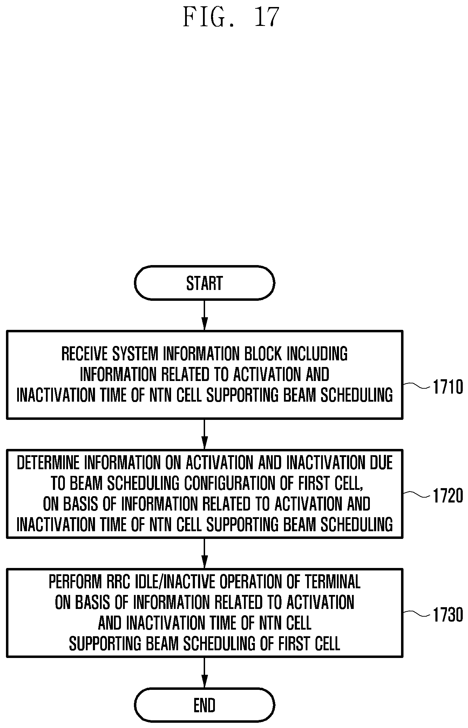

FIG. 17 is a flowchart illustrating a sequence of a terminal operation according to one embodiment of the present disclosure.

Whether an NTN cell is in an activation or inactivation state is described on a premise that it is an activation and inactivation state due to beam scheduling configuration.

In step 1710, a terminal may receive system information (e.g., SIB19, SIB32) including information related to activation and inactivation time of a non-terrestrial network (NTN) cell supporting beam scheduling.

In step 1720, the terminal may determine information on activation and inactivation due to beam scheduling configuration of a first cell based on the information related to activation and inactivation time of an NTN cell supporting beam scheduling. The first cell may include a camping cell, and may include a current serving cell. In addition, the information on activation and inactivation of the first cell may include an activation and inactivation pattern (or cycle, or state) of the first activation cell.

In step 1730, the terminal may perform an operation according to a radio resource control (RRC) idle/inactive state of the terminal based on the information related to activation and inactivation time of an NTN cell supporting beam scheduling of the first cell.

Each step may be performed according to the embodiments described above. According to the present invention, the embodiments described above may be performed independently, or may be performed by being merged respectively.

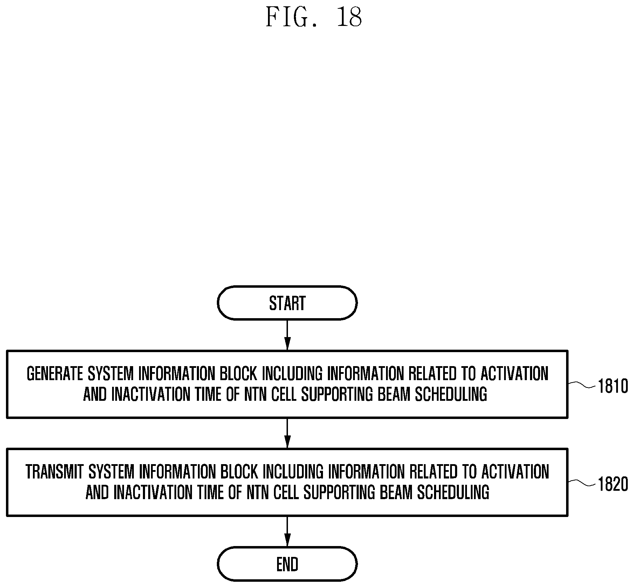

FIG. 18 is a flowchart illustrating a sequence of an operation of a network entity supporting a non-terrestrial network (NTN) according to one embodiment of the present disclosure.

Whether an NTN cell is in an activation or inactivation state is described on a premise that it is an activation and inactivation state due to beam scheduling configuration.

A network entity supporting a non-terrestrial network (NTN) may include both a satellite supporting an NTN, or a base station connected to a satellite supporting an NTN. For example, in case of a regenerative payload satellite in which a satellite performs the role of a base station, the network entity supporting the NTN may mean a regenerative payload satellite itself. If a satellite is a transparent payload satellite serving as a repeater, the network entity supporting the NTN may mean a base station existing on the ground. The network entity supporting the NTN is not limited to the embodiments described above, and a network entity supporting an NTN may also be referred to by terms having the same or similar meaning according to configuration of a satellite network.

In addition, the network entity supporting the NTN may include a network entity capable of configuring an NTN cell supporting beam scheduling.

In step 1810, a network entity capable of configuring an NTN cell supporting beam scheduling may generate a system information block including information related to activation and inactivation time of an NTN cell supporting beam scheduling.

In step 1820, the network entity capable of configuring an NTN cell supporting beam scheduling may transmit system information including the information related to activation and inactivation time of an NTN cell supporting beam scheduling to a terminal.

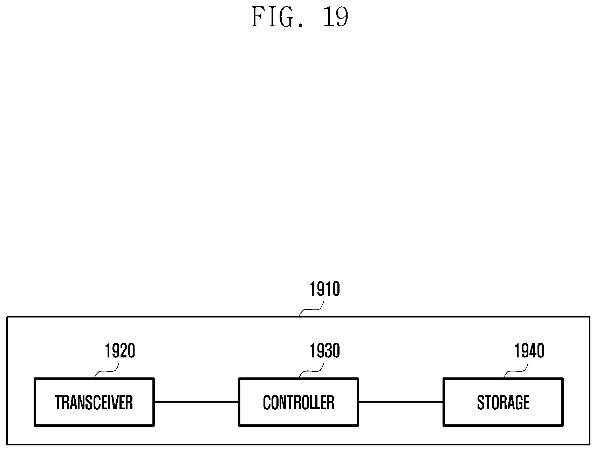

FIG. 19 is a diagram illustrating an internal structure of a terminal according to one embodiment of the present disclosure.

For convenience of description, description will be focused on a terminal, but the scope of rights of the present invention is not limited thereto. The scope of rights of the present invention may include all devices supporting a non-terrestrial network (NTN).

A device (or "entity") supporting a non-terrestrial network (NTN) according to one embodiment of the present disclosure may include a terminal portable by a user (for example, a user equipment (UE) such as a smartphone may be included), a very small aperture terminal (VSAT) equipped with a parabolic antenna or a phase array antenna, or a low-power device (for example, an Internet of Things device, or a sensor may be included). Hereinafter, for convenience of description, description will be focused on a terminal, but the scope of rights of the present invention is not limited thereto.

With reference to FIG. 19, a terminal 1910 according to one embodiment of the present disclosure may include a transceiver 1920, a controller 1930, and a storage 1940.

The transceiver 1920 may transmit and receive signals. The transceiver 1920 may, for example, transmit a signal to a satellite or a base station according to one embodiment of the present disclosure, and receive a signal from a satellite or a base station.

In the present disclosure, the controller 1930 of the terminal may be defined as a circuit or an application-specific integrated circuit or at least one processor. The controller 1930 may control overall operations of a terminal according to one embodiment proposed in the present disclosure. For example, the controller 1930 may control a signal flow between each block to perform operations according to drawings (or flowcharts) described above.

The storage 1940 may store at least any one of information transmitted and received through the transceiver 1920 and information generated through the controller 1930.

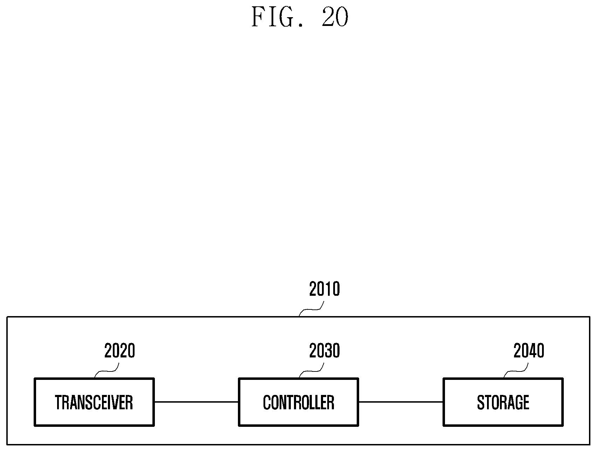

FIG. 20 is a diagram illustrating an internal structure of a network entity supporting an NTN according to one embodiment of the present disclosure.

A network entity supporting a non-terrestrial network (NTN) may include both a satellite supporting an NTN, or a

base station connected to a satellite supporting an NTN. For example, in case of a regenerative payload satellite in which a satellite performs a role of a base station, the network entity supporting the NTN may mean a regenerative payload satellite itself. If a satellite is a transparent payload satellite serving as a repeater, the network entity supporting the NTN may mean a base station existing on the ground. The network entity supporting the NTN is not limited to the embodiments described above, and a network entity supporting an NTN may also be referred to by terms having the same or similar meaning according to configuration of a satellite network.

With reference to FIG. 20, a network entity 2010 supporting an NTN according to one embodiment of the present disclosure may include a transceiver 2020, a controller 2030, and a storage 2040.

The network entity supporting the NTN may include a network entity capable of configuring an NTN cell supporting beam scheduling.

The transceiver 2020 may transmit and receive signals. The transceiver 2020 may, for example, transmit a signal to a satellite or a base station according to one embodiment of the present disclosure, and receive a signal from a satellite or a base station.

In the present disclosure, the controller 2030 of the terminal may be defined as a circuit or an application-specific integrated circuit or at least one processor. The controller 2030 may control overall operations of a terminal according to one embodiment proposed in the present disclosure. For example, the controller 2030 may control a signal flow between each block to perform operations according to drawings (or flowcharts) described above.

The storage 2040 may store at least any one of information transmitted and received through the transceiver 2020 and information generated through the controller 2030.

Methods according to embodiments described in claims or specification of the present invention may be implemented in a form of hardware, software, or a combination of hardware and software.

In a case of being implemented as software, a computer-readable storage medium storing one or more programs (software modules) may be provided. One or more programs stored in the computer-readable storage medium are configured for execution by one or more processors in an electronic device. One or more programs include instructions causing an electronic device to execute methods according to embodiments described in claims or a specification of the present invention.

The programs (e.g., software modules or software) may be stored in random access memory (RAM), non-volatile memory including flash memory, read only memory (ROM), electrically erasable programmable read-only memory (EEPROM), a magnetic disc storage device, compact disc-ROM (CD-ROM), a digital versatile disc (DVD), another optical storage device, or a magnetic cassette. Alternatively, the programs may be stored in a memory including a combination of some or all of the above-described storage media. In addition, each of the memories may be provided in plural.

In addition, the programs may be stored in an attachable storage device accessible through any or a combination of communication networks such as the Internet, an intranet, a local area network (LAN), a wide LAN (WLAN), and a storage area network (SAN). Such a storage device may access, via an external port, a device that performs the embodiments of the present invention. Also, a separate storage device on a communication network may be connected to a device performing an embodiment of the present invention.

In the specific embodiments described above of the present invention, a component or components included in the invention are expressed in a singular or plural form depending on the described embodiments. However, the singular or plural expression is appropriately selected for the situation proposed for the convenience of description, and the present invention is not limited by the singular or plural expression. Therefore, the components expressed with a plural term may be configured in a singular form, or the component expressed with a singular term may be configured in a plural form.

While the detailed description of the present invention has described specific embodiments, various modifications may of course be made without departing from the scope of the invention. Therefore, the scope of the present invention should not be limited to the described embodiments, and should be defined by not only the claims to be described below, but also those equivalent to the claims.

## Claims

**1.** A method performed by a terminal supporting a non-terrestrial network (NTN), the method comprising:

receiving, from a network entity capable of configuring an NTN cell supporting beam scheduling, a system information block (SIB) comprising time information related to activation and inactivation of the NTN cell supporting beam scheduling;
determining activation and inactivation period information of a first NTN cell based on the time information related to the activation and inactivation of the NTN cell supporting beam scheduling; and
performing a radio resource control (RRC) idle state or inactive operation based on the activation and inactivation period information of the first NTN cell.

2. The method of claim 1, wherein the system information block comprises any one of a system information block 19 (SIB 19) or an SIB 32,

the system information block comprises at least one or more of start time point information of an activation and inactivation cycle of the first NTN cell, end time point information of a first activation cycle of the first NTN cell, or period information of a first inactivation cycle of the first NTN cell, and
whether the first NTN cell is activated is determined by beam scheduling of a network entity supporting the NTN.

3. The method of claim 1, wherein the RRC idle or inactive operation comprises:

when a reference signal is not received from the first NTN cell, determining whether the first NTN cell is in an inactivation state;
when the first NTN cell is in the inactivation state, maintaining an RRC idle or inactive state of the terminal; and
when the first NTN cell is in an activation state, performing a cell search procedure, and
wherein the first NTN cell comprises a camping cell.

4. The method of claim 1, wherein the RRC idle or inactive operation comprises:

determining whether the terminal supports discontinuous reception (DRX);
when the first NTN cell is in an inactivation state, omitting monitoring of a physical downlink control channel (PDCCH) in a DRX on-duration period of the terminal; and
when the first NTN cell is in an activation state, monitoring a PDCCH in a DRX on-duration period of the terminal, and
wherein the first NTN cell comprises a serving cell.

5. The method of claim 1, wherein the RRC idle or inactive operation comprises:

occurrence of uplink traffic;
determining whether an occurrence time point of the uplink traffic is an inactivation period of the first NTN cell;
when the occurrence time point of the uplink traffic is the inactivation period of the first NTN cell, suspending a random access procedure until a start time point of an activation period of the first NTN cell; and
when the occurrence time point of the uplink traffic is the activation period of the first NTN cell, performing a random access procedure, and
wherein the first NTN cell includes a camping cell.

6. The method of claim 1, wherein the RRC idle or inactive operation comprises:

determining whether the first NTN cell is in an inactivation state;
when the first NTN cell is in the inactivation state, receiving a signal of a second NTN cell that is in an activation state; and
determining whether to perform cell reselection to the second NTN cell based on information of a last received signal before the first NTN cell enters an inactivation state and received signal information of the second NTN cell, and
wherein the first NTN cell comprises a camping cell, and the second NTN cell comprises at least one or more neighboring cells.

7. A method performed by a network entity supporting a non-terrestrial network (NTN), the method comprising:

generating a system information block comprising information related to activation and inactivation time of an NTN cell supporting beam scheduling; and
transmitting the system information block comprising the information related to activation and inactivation time of the NTN cell supporting beam scheduling, and
wherein activation and inactivation period information of a first NTN cell is based on the information related to activation and inactivation time of the NTN cell supporting beam scheduling, and
a radio resource control (RRC) idle state or inactive operation is based on the activation and inactivation period information of the first NTN cell.

8. The method of claim 7, wherein the system information comprises any one of a system information block 19 (SIB 19) or

an SIB 32,

the system information comprises at least one of start time point information of an activation and inactivation cycle of the first NTN cell, end time point information of a first activation cycle of the first NTN cell, or period information of a first inactivation cycle of the first NTN cell, and
whether the first NTN cell is activated is determined by beam scheduling of the network entity supporting the NTN.

**9.** A terminal supporting a non-terrestrial network (NTN), the terminal comprising:

a transceiver configured to transmit and receive signals; and
a controller,
wherein the controller:

receives, from a network entity capable of configuring an NTN cell supporting beam scheduling, a system information block (SIB) comprising time information related to activation and inactivation of the NTN cell supporting beam scheduling;
determines activation and inactivation period information of a first NTN cell based on the time information related to the activation and inactivation of the NTN cell supporting beam scheduling; and
performs a radio resource control (RRC) idle state or inactive operation based on the activation and inactivation period information of the first NTN cell.

**10.** The terminal of claim 9, wherein the controller:

determines whether the first NTN cell is in an inactivation state when a reference signal is not received from the first NTN cell;
maintains an RRC idle or inactive state of the terminal when the first NTN cell is in the inactivation state; and
performs a cell search procedure when the first NTN cell is in an activation state,
wherein the first NTN cell comprises a camping cell,
the system information block comprises any one of a system information block 19 (SIB 19) or an SIB 32,
the system information block comprises at least one of start time point information of an activation and inactivation cycle of the first NTN cell, end time point information of a first activation cycle of the first NTN cell, or period information of a first inactivation cycle of the first NTN cell, and
whether the first NTN cell is activated is determined by beam scheduling of a network entity supporting the NTN.

**11.** The terminal of claim 9, wherein the controller:

determines whether the terminal supports discontinuous reception (DRX);
omits monitoring of a physical downlink control channel (PDCCH) in a DRX on-duration period of the terminal when the first NTN cell is in an inactivation state; and
monitors a PDCCH in a DRX on-duration period of the terminal when the first NTN cell is in an activation state, and
wherein the first NTN cell includes a serving cell.

**12.** The terminal of claim 9, wherein the controller:

occurrs of uplink traffic;
determines whether an occurrence time point of the uplink traffic is an inactivation period of the first NTN cell when uplink traffic occurs:

suspends a random access procedure until a start time point of an activation period of the first NTN cell when the occurrence time point of the uplink traffic is the inactivation period of the first NTN cell; and
performs a random access procedure when the occurrence time point of the uplink traffic is the activation period of the first NTN cell, and
wherein the first NTN cell comprises a camping cell.

**13.** The terminal of claim 9, wherein the controller:

determines whether the first NTN cell is in an inactivation state;
receives a signal of a second NTN cell that is in an activation state when the first NTN cell is in the inactivation

state; and
determines whether to perform cell reselection to the second NTN cell based on information of a last received signal before the first NTN cell enters the inactivation state and received signal information of the second NTN cell, and
wherein the first NTN cell comprises a camping cell, and the second NTN cell comprises at least one or more neighboring cells.

**14.** A network entity supporting a non-terrestrial network (NTN), the network entity comprising:

a transceiver configured to transmit and receive signals; and
a controller,
wherein the controller:

generates a system information block comprising information related to activation and inactivation time of an NTN cell supporting beam scheduling; and
transmits the system information block comprising the information related to activation and inactivation time of the NTN cell supporting beam scheduling, and
wherein activation and inactivation period information of a first NTN cell is based on the information related to the activation and inactivation time of the NTN cell supporting beam scheduling, and
a radio resource control (RRC) idle state or inactive operation is based on the activation and inactivation period information of the first NTN cell.

**15.** The network entity of claim 14, wherein the system information comprises any one of a system information block 19 (SIB 19) or an SIB 32,

the system information comprises at least one of start time point information of an activation and inactivation cycle of the first NTN cell, end time point information of a first activation cycle of the first NTN cell, or period information of a first inactivation cycle of the first NTN cell, and
whether the first NTN cell is activated is determined by beam scheduling of the network entity supporting the NTN.

FIG. 1

125
MME
130
eNB
NR CN
105
110
NR gNB
120
Radio access
115
NR UE
135

FIG. 2

201
SATELLITE
FEEDER LINK
ACCESS LINK
UE
202
Cell
203
GROUND STATION
204
BASE STATION
205
CORE NETWORK

FIG. 3

380
Data Network
NG
370
5G CN
NG
360
gNB
NG-RAN
320
350
NTN Gateway
NR Uu
340
Remote Radio Unit
330
UE
310

FIG. 4A

User Equipment
NTN payload
NTN Gateway
DU
CU
CN NFs
CN NFs
CN
Data Network

FIG. 4B

User Equipment
DU
NTN payload
NTN Gateway
CU
CN NFs
CN NFs
CN
Data Network

User Equipment
DU
CU
NTN payload
NTN Gateway
CN NFs
CN NFs
CN
Data Network

FIG. 5A

NTN vehicle (GEO satellite)
Non-steerable spot beam
Satellite coverage
earth fixed cell

FIG. 5B

NTN vehicle at time t1
Satellite movement direction
NTN vehicle at time t2
Steerable spot beam
Satellite coverage
Quasi-earth fixed cell

FIG. 5C

NTN vehicle at time t1
Satellite movement direction
NTN vehicle at time t2
Non-steerable spot beam
Satellite coverage
Earth moving cell
Spot beam movement direction

FIG. 6

No signal transmission
including reference signal
(e.g., SSB) and data signal
Activation/inactivation
switching via pre-
scheduled duty cycle
signal transmission
including reference signal
(e.g., SSB) and data signal
Cell inactive state
Cell inactive state

FIG. 7

701
703
TERMINAL
NETWORK ENTITY CAPABLE OF CONFIGURING NTN CELL SUPPORTING BEAM SCHEDULING
SYSTEM INFORMATION BLOCK
[INFORMATION RELATED TO ACTIVATION AND INACTIVATION TIME OF NTN CELL SUPPORTING BEAM SCHEDULING]
710

FIG. 8A

ntn-cellDutyCycleStartsfn
inactivationDuration
CellactivationInfo
activationFinSfn
: Beam activation period

FIG. 8B

$SFN_{ds}$
ntn-cellDutyCycleStartsfn
$SFN^{1}_{af}$
activationFinSfn (1st )
$SFN^{2}_{af}$
activationFinSfn (2nd )
inactivationDuration (1st )
$D^{1}$
inactivationDuration (2nd )
$D^{2}$
Successful
initial access

- Duty cycle = $SFN^{2}_{af} - SFN_{ds} + D^{2}$
- 1st activation duration = $SFN^{1}_{af} - SFN_{ds}$
- 2nd activation duration = $SFN^{2}_{af} - SFN^{1}_{af} - D^{1}$
- Next starting SFN of duty cycle = $2SFN^{2}_{af} - SFN_{ds} + D^{2}$
- 1st activation finish SFN of next duty cycle = $2SFN^{2}_{af} + SFN^{1}_{af} - 2SFN_{ds} + D^{2}$

FIG. 9

START
910
CAMP ON NTN CELL
920
ACQUIRE INFORMATION RELATED TO ACTIVATION AND INACTIVATION TIME OF NTN CELL SUPPORTING BEAM SCHEDULING
930
CALCULATE ACTIVATION AND INACTIVATION PERIOD OF NTN CELL IN WHICH BEAM SCHEDULING IS CONFIGURED, ON BASIS OF INFORMATION RELATED TO ACTIVATION AND INACTIVATION TIME OF NTN CELL SUPPORTING BEAM SCHEDULING
940
DETERMINE WHETHER NTN CELL IS IN INACTIVATION PERIOD DUE TO BEAM SCHEDULING CONFIGURATION WHEN REFERENCE SIGNAL IS NOT RECEIVED
950
PERFORME CELL SEARCH PROCEDURE FOR CELL RESELECTION WHEN NTN CELL IS NOT IN INACTIVATION PERIOD DUE TO BEAM SCHEDULING CONFIGURATION
960
MAINTAIN RRC IDLE/INACTIVE STATE WHEN NTN CELL IS IN INACTIVATION PERIOD DUE TO SPOT BEAM SCHEDULING CONFIGURATION

FIG. 10A

SSB
Cell A activation
NO SSB
Cell A activation
UE in RRC inactive or idle state w/DRX
NON-RECEPTION OF SSB
→ PERFORMING CELL RESELECTION [CELL SEARCH]
INCREASE IN POWER CONSUMPTION OF UE

FIG. 10B

Cell A activation

Cell A activation

UE in
RRC inactive or
idle state
w/DRX

Skipping cell reselection

FIG. 11

START
1110
ACQUIRE INFORMATION RELATED TO ACTIVATION AND INACTIVATION TIME OF NTN CELL SUPPORTING BEAM SCHEDULING
1120
DETERMINE WHETHER CURRENT SERVING CELL IS IN INACTIVATION STATE DUE TO BEAM SCHEDULING CONFIGURATION, ON BASIS OF INFORMATION RELATED TO ACTIVATION AND INACTIVATION TIME OF NTN CELL SUPPORTING BEAM SCHEDULING
NO
YES
1130
PERFORM CELL SEARCH PROCEDURE FOR CELL RESELECTION
1140
OMIT PDCCH MONITORING IN ON-DURATION WHEN SERVING CELL IS IN INACTIVATION PERIOD DUE TO BEAM SCHEDULING CONFIGURATION
1150
RESUME PDCCH MONITORING WHEN SERVING CELL SWITCHES TO ACTIVATION STATE

FIG. 12

Cell A activation
Cell A activation
UE in
RRC inactive or
idle state
w/DRX
Monitors short Messages transmitted with P-RNTI over DCI (see clause 6.5);
- Monitors a Paging channel for CN paging using 5G-S-TMSI, except if the UE is acting as a L2 U2N Remote UE; (skipping)
- Performs neighbouring cell measurements and cell (re-) selection;
- Acquires system information and can send SI request (if configured); (skipping)
-- Performs idle/inactive measurements for idle/inactive measurements configured UEs;
...

FIG. 13

START
1310
ACQUIRE INFORMATION RELATED TO ACTIVATION AND INACTIVATION TIME OF NTN CELL SUPPORTING BEAM SCHEDULING
1320
CALCULATE ACTIVATION AND INACTIVATION PERIOD DUE TO BEAM SCHEDULING CONFIGURATION OF CAMPING CELL, ON BASIS OF INFORMATION RELATED TO ACTIVATION AND INACTIVATION OF NTN CELL SUPPORTING BEAM SCHEDULING
1330
OCCURRENCE OF UPLINK TRAFFIC
1340
DETERMINE WHETHER OCCURRENCE TIME POINT OF UPLINK TRAFFIC IS INACTIVATION PERIOD DUE TO SPOT BEAM SCHEDULING CONFIGURATION OF CAMPING CELL
NO
YES
1350
PERFORM RANDOM ACCESS IMMEDIATELY
1360
WAIT FOR RANDOM ACCESS UNTIL ACTIVATION TIME POINT OF CAMPING CELL
1370
WAIT FOR RANDOM ACCESS WHEN CAMPING CELL IS ACTIVATED

FIG. 14


UE in RRC inactive or idle state w/DRX
Cell A activation
UL traffic
Postponed
Cell A activation

FIG. 15

START
ACQUIRE INFORMATION RELATED TO ACTIVATION AND INACTIVATION TIME OF NTN CELL SUPPORTING BEAM SCHEDULING
1510
CALCULATE ACTIVATION AND INACTIVATION PERIOD DUE TO BEAM SCHEDULING CONFIGURATION OF FIRST CELL, ON BASIS OF INFORMATION RELATED TO ACTIVATION AND INACTIVATION TIME OF NTN CELL SUPPORTING BEAM SCHEDULING
1520
DETERMINE THAT FIRST CELL IS IN INACTIVATION STATE DUE TO BEAM SCHEDULING CONFIGURATION
1530
ENTER RRC IDLE/INACTIVE STATE
1540
DISCOVER SECOND CELL THAT IS IN ACTIVATION STATE
1550
PERFORM CELL SELECTION PROCEDURE ON BASIS OF LAST RECEIVED SIGNAL INFORMATION OF FIRST CELL AND RECEIVED SIGNAL INFORMATION OF SECOND CELL
1560
END

FIG. 16A

Cell A's SSB
Cell B's SSB
Cell A activation
Cell B activation
Cell A activation
UE in RRC inactive or idle state w/DRX
Cell reselection (cell A to cell B)
Cell reselection (cell B to cell A)
Ping-pong effect

Cell A's SSB
Cell B's SSB
Cell A activation
Cell B activation
Cell A activation
UE in RRC inactive or idle state w/DRX
No Cell reselection and comping in cell

FIG. 16B

FIG. 17

START
RECEIVE SYSTEM INFORMATION BLOCK INCLUDING INFORMATION RELATED TO ACTIVATION AND INACTIVATION TIME OF NTN CELL SUPPORTING BEAM SCHEDULING
1710
DETERMINE INFORMATION ON ACTIVATION AND INACTIVATION DUE TO BEAM SCHEDULING CONFIGURATION OF FIRST CELL, ON BASIS OF INFORMATION RELATED TO ACTIVATION AND INACTIVATION TIME OF NTN CELL SUPPORTING BEAM SCHEDULING
1720
PERFORM RRC IDLE/INACTIVE OPERATION OF TERMINAL ON BASIS OF INFORMATION RELATED TO ACTIVATION AND INACTIVATION TIME OF NTN CELL SUPPORTING BEAM SCHEDULING OF FIRST CELL
1730
END

FIG. 18

START
GENERATE SYSTEM INFORMATION BLOCK INCLUDING INFORMATION RELATED TO ACTIVATION AND INACTIVATION TIME OF NTN CELL SUPPORTING BEAM SCHEDULING
1810
TRANSMIT SYSTEM INFORMATION BLOCK INCLUDING INFORMATION RELATED TO ACTIVATION AND INACTIVATION TIME OF NTN CELL SUPPORTING BEAM SCHEDULING
1820
END

FIG. 19

1910
1920
1930
1940
TRANSCEIVER
CONTROLLER
STORAGE

FIG. 20

2010
2020
2030
2040
TRANSCEIVER
CONTROLLER
STORAGE

## INTERNATIONAL SEARCH REPORT

International application No. **PCT/KR2024/000888**

**A. CLASSIFICATION OF SUBJECT MATTER**

**H04W 48/20**(2009.01)i; **H04W 48/10**(2009.01)i; **H04W 48/16**(2009.01)i; **H04W 76/27**(2018.01)i; **H04W 76/28**(2018.01)i; **H04W 74/08**(2009.01)i; **H04W 16/28**(2009.01)i; **H04W 84/06**(2009.01)i

According to International Patent Classification (IPC) or to both national classification and IPC

**B. FIELDS SEARCHED**

Minimum documentation searched (classification system followed by classification symbols)

H04W 48/20(2009.01); H04W 48/08(2009.01); H04W 76/15(2018.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비지상망(non-terrestrial network, NTN), 빔 스케줄링(beam scheduling), 활성화(activation), 비활성화(inactivation), 시스템 정보 블록(system information block, SIB), radio resource control(RRC) 유휴(idle), SIB 19, SIB 32, 셀 탐색(cell search), 불연속적인 수신(discontinuous reception, DRX), PDCCH 모니터링(monitoring), 랜덤 액세스(random access)

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2021-0134620 A (IDAC HOLDINGS, INC.) 10 November 2021 (2021-11-10)<br>See paragraphs [0061], [0078] and [0083]-[0092]; claim 1; and figure 11. | 1-4,7-11,14-15<br>5-6,12-13 |
| Y | NOKIA et al. On Enhanced Cell Reselection in Rel-18 NTN. R2-2300476, 3GPP TSG-RAN WG2 Meeting #121. Athens, Greece. 17 February 2023.<br>See sections 1-3. | 1-4,7-11,14-15 |
| Y | KR 10-2023-0105431 A (SAMSUNG ELECTRONICS CO., LTD.) 11 July 2023 (2023-07-11)<br>See paragraphs [0104] and [0242]. | 4,11 |
| A | ZTE CORPORATION et al. Cell reselection enhancements for NTNNTN. R2-2301142, 3GPP TSG-RAN WG2 Meeting#121. Athens, Greece. 17 February 2023.<br>See sections 2-3. | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 October 2024** | **14 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/000888

C. DOCUMENTS CONSIDERED TO BE RELEVANT

| Category* | Citation of document, with indication, where appropriate, of the relevant passages | Relevant to claim No. |
|---|---|---|
| A | CMCC. Discussion on RRM core requirements for NR NTN enhancement. R4-2307599, 3GPP TSG-RAN WG4 Meeting #107. Incheon, KR. 15 May 2023. See sections 2-4. | 1-15 |

Form PCT/ISA/210 (second sheet) (July 2022)

**INTERNATIONAL SEARCH REPORT**
**Information on patent family members**

International application No.
**PCT/KR2024/000888**

| Patent document cited in search report | Publication date (day/month/year) | Patent family member(s) | Publication date (day/month/year) |
|---|---|---|---|
| KR 10-2021-0134620 A | 10 November 2021 | BR 112021015545 A2 | 05 October 2021 |
| | | CN 113475010 A | 01 October 2021 |
| | | CN 113475010 B | 22 September 2023 |
| | | CN 117200860 A | 08 December 2023 |
| | | EP 3921955 A1 | 15 December 2021 |
| | | US 2022-0030532 A1 | 27 January 2022 |
| | | WO 2020-163610 A1 | 13 August 2020 |
| KR 10-2023-0105431 A | 11 July 2023 | WO 2023-132619 A1 | 13 July 2023 |

Form PCT/ISA/210 (patent family annex) (July 2022)